# EUROPEAN PATENT APPLICATION

(11) **EP 4 451 087 A1**
(43) Date of publication of application: **23.10.2024**
(21) Application number: 23775146.6
(22) Date of filing: 01.02.2023
(51) Int. Cl.: G06F 1/16, G06F 1/26, H02P 1/18, H02P 1/22

(54) **ELECTRONIC DEVICE AND METHOD FOR CONTROLLING MOTOR THAT DEFORMS FLEXIBLE DISPLAY**

(30) Priority: 21.03.2022 KR 20220034950; 13.07.2022 KR 20220086590
(71) Applicant: Samsung Electronics Co., Ltd, Suwon-si, Gyeonggi-do 16677 (KR)
(72) Inventor: CHO, Baekeun, Suwon-si, Gyeonggi-do 16677 (KR); KANG, Hyunggwang, Suwon-si, Gyeonggi-do 16677 (KR); KIM, Bohyeon, Suwon-si, Gyeonggi-do 16677 (KR); KIM, Junhyuk, Suwon-si, Gyeonggi-do 16677 (KR); KWAK, Myunghoon, Suwon-si, Gyeonggi-do 16677 (KR); KIM, Moonsun, Suwon-si, Gyeonggi-do 16677 (KR); CHO, Hyoungtak, Suwon-si, Gyeonggi-do 16677 (KR); LEE, Junghyeob, Suwon-si, Gyeonggi-do 16677 (KR); HONG, Hyunju, Suwon-si, Gyeonggi-do 16677 (KR)
(74) Representative: Gulde & Partner
(86) International application number: PCT/KR2023/001465
(87) International publication number: WO 2023/182643

(57) **Abstract**

According to an embodiment, an electronic device may comprise: a first housing; a second housing slidably coupled to the first housing; and a flexible display disposed on one surface of the second housing. The electronic device may comprise: a motor for moving the flexible display into or out of the first housing; and a control circuit for controlling the motor. The electronic device may comprise a processor activated by power supplied through a first path. The control circuit may control the motor on the basis of a first control signal received from the processor in a first state in which the first path has been established. The control circuit may control the motor on the basis of a second control signal different from the first control signal in a second state different from the first state.

## Description

### [Technical Field]

The following descriptions relate to an electronic device and method for controlling a motor that deforms a flexible display.

### [Background Art]

An electronic device having a deformable form factor is being developed using a flexible display. The electronic device may include a plurality of housings that are foldable based on a hinge. The electronic device may provide a user with a user experience based on a shape of the electronic device by using a flexible display disposed across the plurality of housings. For example, based on a shape of a flexible display that is folded or unfolded by the user's external force, the electronic device may change the content displayed on the flexible display.

### [Disclosure]

### [Technical Solution]

An electronic device according to an embodiment may comprise a first housing. The electronic device may comprise a second housing slidably coupled with respect to the first housing. The electronic device may comprise a flexible display disposed on one surface of the second housing. The flexible display of the electronic device may be insertable into the first housing or extractable from the first housing. The electronic device may comprise a battery for storing an electric power. The electronic device may comprise power circuitry that controls a first path for supplying the electric power stored in the battery. The electronic device may comprise a motor for inserting the flexible display into the first housing or extracting the flexible display from the first housing. The electronic device may comprise control circuitry that controls the motor. The electronic device may comprise at least one processor operably coupled to the flexible display, the power circuitry, the motor, and the control circuitry. The control circuitry of the electronic device may be activated through a second path different from the first path. The control circuitry of the electronic device may detect whether the first path is established by the power circuitry. The control circuitry of the electronic device may control the motor based on a first control signal received from the at least one processor activated by the electric power supplied by the first path, in a first state in which the first path is established. The control circuitry of the electronic device may control the motor based on a second control signal different from the first control signal, in a second state different from the first state.

A method of an electronic device according to an embodiment may comprise detecting whether a first path for supplying electric power stored in a battery of the electronic device is established by power circuitry of the electronic device. The method of the electronic device may comprise controlling a motor for adjusting a size which is exposed outside of a flexible display of the electronic device based on a first control signal received from at least one processor of the electronic device activated by the electric power supplied by the first path, in a first state in which the first path is established. The method of the electronic device may comprise controlling the motor based on a second control signal received based on a preset button of the electronic device, in a second state different from the first state. The detecting may be performed based on the electric power supplied from a second path formed from the battery independently of the power circuitry.

An electronic device according to an embodiment may comprise a first housing. The electronic device may comprise a second housing slidably coupled with respect to the first housing. The electronic device may comprise a flexible display disposed on one surface of the second housing and insertable into the first housing or extractable from the first housing. The electronic device may comprise a motor for inserting the flexible display into the first housing or extracting the flexible display from the first housing. The electronic device may comprise control circuitry that controls the motor. The electronic device may comprise at least one processor operably coupled to the flexible display, the motor, and the control circuitry. The control circuitry of the electronic device may control the motor based on a first control signal received from the at least one processor in a first time period in which a voltage exceeding a preset threshold is applied to the at least one processor. The control circuitry of the electronic device may control the motor based on a second control signal received independently from the at least one processor in a second time period, different from the first time period, in which the voltage applied to the at least one processor is less than or equal to the preset threshold.

### [Description of the Drawings]

FIG. 1 is a block diagram of an electronic device in a network environment according to an embodiment.
FIGS. 2A to 2B are exemplary diagrams for describing different states related to a flexible display of an electronic device according to an embodiment.
FIG. 3 is a block diagram of an electronic device according to an embodiment.
FIGS. 4A to 4B are block diagrams for describing a motor included in an electronic device and a control circuit for controlling the motor, according to an embodiment.
FIG. 5 is an exemplary circuit diagram of a detection circuit connected to a power management module in a control circuit of an electronic device, according to an embodiment.
FIG. 6 is an exemplary circuit diagram of first switch circuitry for processing control signals in a control circuit of an electronic device, according to an embodiment.
FIG. 7 is an exemplary circuit diagram of a driving circuit connected to a motor of an electronic device in a control circuit of the electronic device, according to an embodiment.
FIG. 8 is an exemplary circuit diagram of a signal processing circuit for processing an electrical signal received from a button in an electronic device, according to an embodiment.
FIG. 9 is an exemplary diagram for describing an operation performed by an electronic device based on a sensor for detecting an arrangement of housings, according to an embodiment.
FIG. 10 is an exemplary circuit diagram of a detection circuit connected to a sensor in a control circuit of an electronic device of FIG. 9.
FIG. 11 is an exemplary diagram for describing an operation performed by an electronic device based on sensors for detecting an arrangement of housings, according to an embodiment.
FIG. 12 is an exemplary circuit diagram of a signal processing circuit connected to sensors in a control circuit of an electronic device of FIG. 11.
FIG. 13 is a flowchart for describing an operation of an electronic device according to an embodiment.
FIG. 14 is a flowchart for describing an operation of an electronic device according to an embodiment.
FIG. 15A is a front view of a first state of an electronic device according to an embodiment.
FIG. 15B is a rear view of a first state of an electronic device according to an embodiment.
FIG. 15C is a front view of a second state of an electronic device according to an embodiment.
FIG. 15D is a rear view of a second state of an electronic device according to an embodiment.
FIG. 16A is an exploded perspective view of an electronic device according to an embodiment.
FIG. 16B is a cross-sectional view illustrating an example of an electronic device cut along A-A' of FIG. 15A, according to an embodiment.
FIG. 17 is a front view of a second state indicating a boundary portion of a display in an electronic device, according to an embodiment.

### [Mode for Invention]

Hereinafter, various embodiments of the present document will be described with reference to the accompanying drawings.

It should be appreciated that various embodiments of the present disclosure and the terms used therein are not intended to limit the technology set forth herein to particular embodiments and include various changes, equivalents, or replacements for a corresponding embodiment. With regard to the description of the drawings, similar reference numerals may be used to refer to similar elements. It is to be understood that a singular form of a noun corresponding to an item may include one or more of the things, unless the relevant context clearly indicates otherwise. As used herein, phrases as "A or B," "at least one of A and/or B," "A, B, or C," or "at least one of A, B, and/or C," may include all possible combinations of the items enumerated together. Terms as "1st" and "2nd," or "first" and "second" may modify the corresponding components regardless of order or importance, and are only used to simply distinguish one component from another, and does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module", used in the present disclosure, may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, the module may be configured as an application-specific integrated circuit (ASIC).

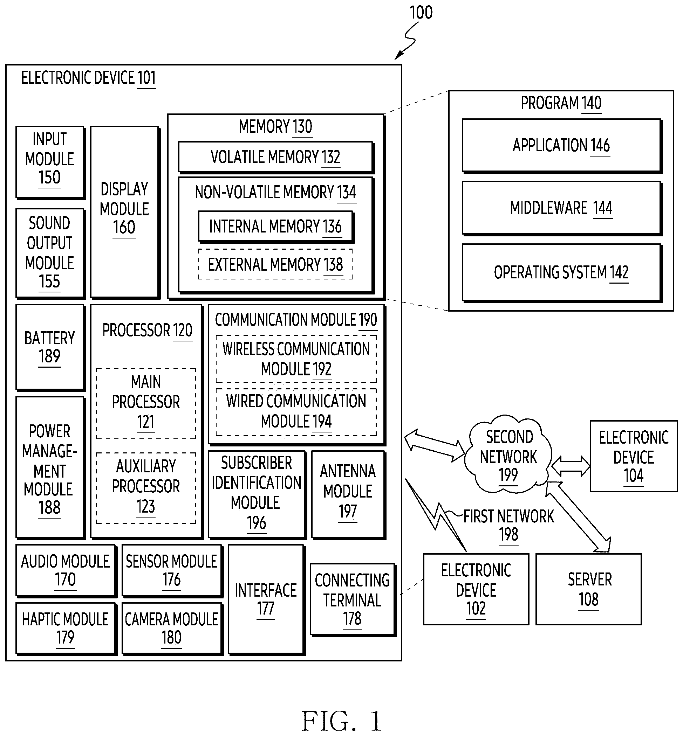

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

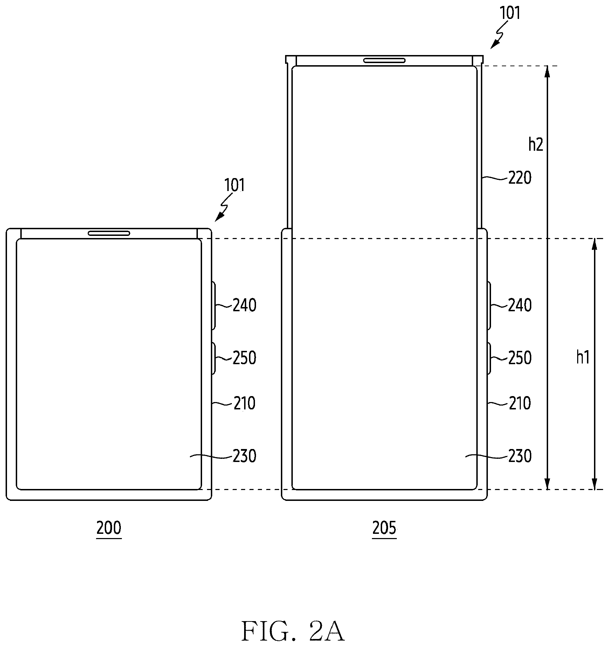

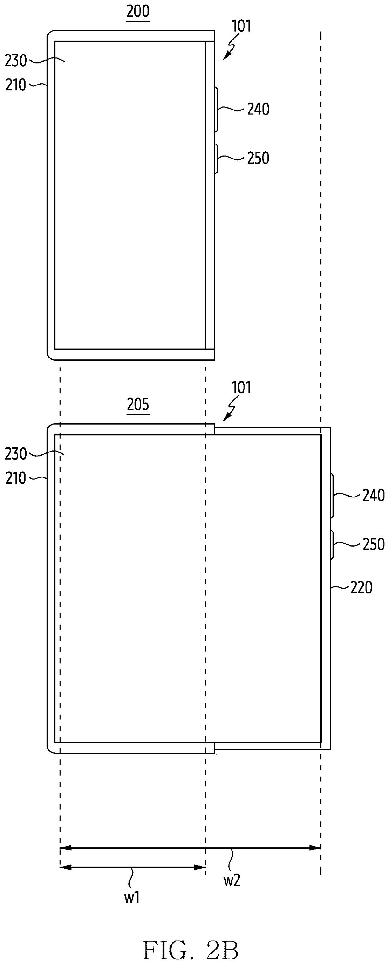

FIGS. 2A to 2B are exemplary diagrams for describing different states 200 and 205 related to a flexible display 230 of an electronic device 101 according to an embodiment. The electronic device 101 of FIG. 1 may be an example of the electronic device 101 of FIGS. 2A and 2B. Referring to FIGS. 2A to 2B, the electronic device 101 may be a terminal be owned by a user. The terminal may include, for example, a personal computer (PC) such as a laptop and desktop, a smartphone, a smart pad, a tablet personal computer (PC), and smart accessories such as a smartwatch and a head-mounted device (HMD).

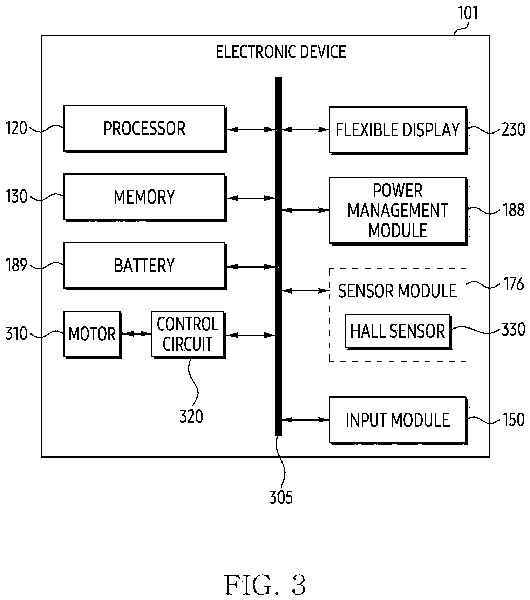

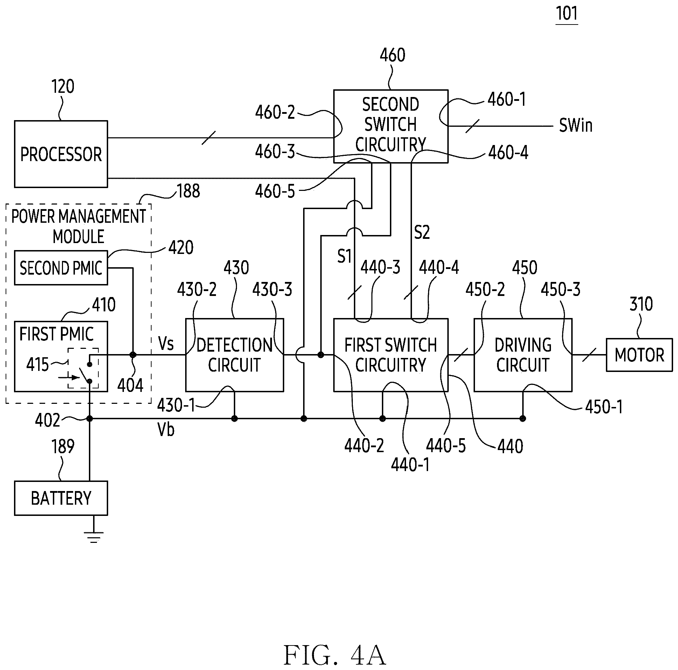

According to an embodiment, the electronic device 101 may have a deformable form factor. Deformation of the electronic device 101 may mean that at least one of dimensions such as width, height, and/or thickness of the electronic device 101 is changed. At least one of the above dimensions may be passively changed by an external force applied to the electronic device 101, and/or may be actively changed by one or more actuators (e.g., motor) included in the electronic device 101. An example of a structure of a hardware of the electronic device 101 including the one or more actuators will be described later with reference to FIGS. 3 and 4A to 4B.

According to an embodiment, the electronic device 101 may change a shape of the electronic device 101 by adjusting a positional relationship of a plurality of housings. Referring to FIGS. 2A to 2B, the electronic device 101 according to an embodiment may include a first housing 210 and a second housing 220. According to an embodiment, the electronic device 101 may include a flexible display 230 disposed on one surface (e.g., a front surface) formed by the first housing 210 and/or the second housing 220. The flexible display 230 may be related to a display module 160 of FIG. 1. In an embodiment, the first housing 210 and the second housing 220 may be interconnected with each other to deform the flexible display 230 and/or the electronic device 101. Deformation of the electronic device 101 may cause a change in at least one of a breadth, a width, and/or an extent of an area of the flexible display 230 exposed to an outside. In an embodiment, the flexible display 230 may be referred to as a rollable display.

Referring to FIGS. 2A to 2B, an embodiment in which the first housing 210 is slidably coupled with respect to the second housing 220 is illustrated. However, the embodiment is not limited thereto. The flexible display 230 may be insertable into the first housing 210 or extractable from the first housing 210, based on the deformation of the electronic device 101. In case that the flexible display 230 is inserted into the first housing 210, the dimension of the area in which the flexible display 230 is exposed to the outside may be reduced. In case that the flexible display 230 is extracted from the first housing 210, the dimension of the area in which the flexible display 230 is exposed to the outside may increase. Hereinafter, a displaying area of the flexible display 230 may mean an area formed by pixels disposed on the area where the flexible display 230 is exposed to the outside among pixels included in the flexible display 230. For example, the displaying area may be referred to as an active area of the flexible display 230.

Referring to FIGS. 2A to 2B, different states 200 and 205 of the electronic device 101 and/or the flexible display 230 are illustrated. The electronic device 101 according to an embodiment may switch between the states 200 and 205 by using an actuator such as a motor. The electronic device 101 deforming the electronic device 101 between the states 200 and 205 by using the actuator may be performed to prevent damage (or irreversible deformation of the electronic device 101) to the electronic device 101 due to the deformation of the electronic device 101 based on external force.

In an embodiment, the states 200 and 205 distinguished according to the shape of the electronic device 101 may be distinguished according to dimensions (e.g., width, height, thickness, and/or an aspect ratio) of the electronic device 101 and/or the flexible display 230. The states 200 and 205 may be distinguished according to a distance between the first housing 210 and the second housing 220 of the electronic device 101. For example, the distance between the first housing 210 and the second housing 220 may be a distance between one surface of the first housing 210 (e.g., a side surface of the first housing 210) and another surface of the second housing 220 (e.g., a side surface of the second housing 220) parallel to the one surface of the first housing 210 and spaced apart from the one surface of the first housing 210.

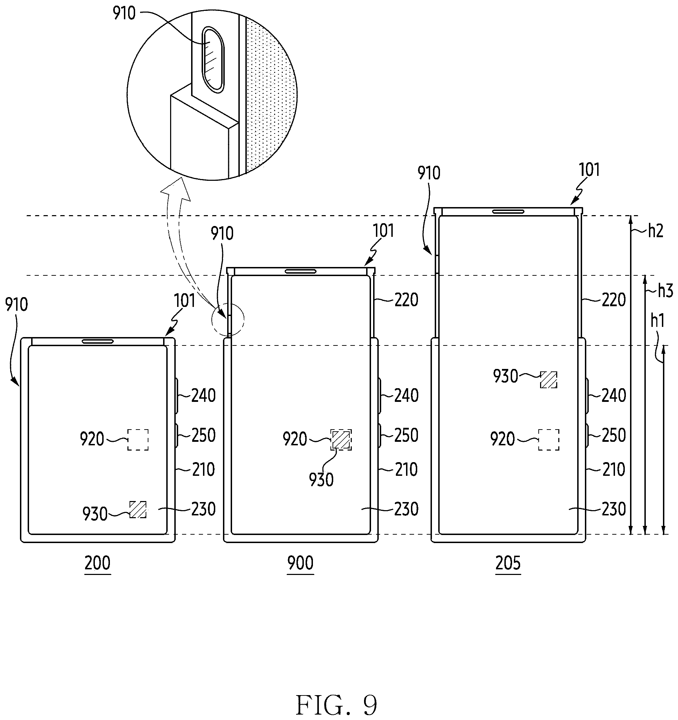

Each of the states 200 and 205 of FIGS. 2A to 2B may be a state in which, as the electronic device 101 is deformed, a surface area of the electronic device 101 and/or the extent of the displaying area of the flexible display 230 is minimized or maximized. Hereinafter, as in the state 200, a state in which the surface area of the electronic device 101 and/or the extent of the displaying area is minimized may be referred to as a slide-in state, a rolled state, and/or a contracted state. Hereinafter, as in the state 205, a state in which the surface area of the electronic device 101 and/or the extent of the displaying area is maximized may be referred to as a slide-out state, an unrolled state, and/or an expanded state. In an embodiment, the state of the electronic device 101 may further include another state between the state 200 in which the extent of the displaying area is minimum and the state 205 in which the extent of the displaying area is maximum. The other state may be referred to as an intermediate state. An example of the intermediate state will be described later with reference to FIG. 9.

Referring to FIGS. 2A to 2B, the flexible display 230 included in the electronic device 101 according to an embodiment may have a rectangular shape. In an embodiment, corners of the flexible display 230 may have a rounded corner shape. Hereinafter, among sides that are the boundary of the rectangular flexible display 230, a first direction parallel to a relatively long side may be referred to as a height direction and the relatively long side may be referred to as the height. Hereinafter, among the sides that are the boundary of the rectangular flexible display 230, a second direction parallel to a relatively short side may be referred to as a width direction and the relatively short side may be referred to as the width.

Referring to FIG. 2A, an embodiment in which the electronic device 101 deforms the shape of the electronic device 101 along the height direction among the width direction or the height direction of the flexible display 230 is illustrated. Height h1 of the flexible display 230 in the state 200 of FIG. 2A may be a minimum value of the height of the deformable flexible display 230. Height h2 of the flexible display 230 in the state 205 of FIG. 2A may be a maximum value of the height of the deformable flexible display 230. For example, the height h1 may be the height of the flexible display 230 in the slide-in state, and the height h2 may be the height of the flexible display 230 in the slide-out state.

Referring to FIG. 2B, an embodiment in which the electronic device 101 deforms the shape of the electronic device 101 along the height direction among the width direction or the height direction is illustrated. Width w1 in the state 200 and width w2 in the state 205 of FIG. 2B may be a minimum value and a maximum value of the width of the deformable flexible display 230, respectively. As the height and/or width of the flexible display 230 is adjusted, the electronic device 101 may change the aspect ratio of the flexible display 230 to an aspect ratio suitable for content outputted from the electronic device 101. For example, the aspect ratio may be selected from 4.5:3, 16:9, and 21:9.

The electronic device 101 according to an embodiment may change the shape of the electronic device 101 in response to detecting a preset event. Changing the shape of the electronic device 101 may be performed by activating an actuator such as a motor by the electronic device 101. For example, kinetic energy required for changing the shape of the electronic device 101 may be outputted from a battery included in the electronic device 101 and/or the actuator. Deformation of the electronic device 101 by the kinetic energy may be performed independently of the external force applied to the electronic device 101 by the user.

For example, a preset event for changing the shape of the electronic device 101 may include a software interrupt (SWI) generated from an operating system and/or an application running on the electronic device 101. The software interrupt may be generated by an application for reproducing multimedia content (e.g., video) having a specific aspect ratio. For example, the preset event may be generated by a gesture performed on flexible display 230. The gesture may include at least one of a pinch-to-zoom gesture, a swipe gesture, or a gesture of touching a preset visual object (e.g., an icon with an aspect ratio displayed) displayed on the flexible display 230. For example, the preset event may be generated by a gesture of pressing a button (e.g., buttons 240 and 250) of the electronic device 101.

The electronic device 101 according to an embodiment may support deformation of the electronic device 101 based on the actuator, independently of a state of an integrated circuit for processing the preset event, such as a processor (e.g., an application processor (AP) and/or a central processing unit (CPU)). While driving of the integrated circuit is at least temporarily ceased, such as a sleep mode and/or a power-off mode, the electronic device 101 may change the shape of the electronic device 101 based on the gesture of pressing the button.

Referring to FIGS. 2A to 2B, an embodiment in which the electronic device 101 includes the buttons 240 and 250 is illustrated. For example, the button 240 may be a button for receiving a preset input for increasing or decreasing volume. In the above example, the button 240 may include a seesaw switch that outputs different electrical signals with respect to pressure applied to different parts. While driving of the processor of the electronic device 101 is ceased, the electronic device 101 may receive a first input for receiving a direction to deform the electronic device 101 through the button 240. In an embodiment where the button 240 is a seesaw switch for adjusting the volume, the first input may be received based on a first part for receiving the input for increasing the volume in the button 240 and include a second input for increasing the dimension of the displaying area of the flexible display 230. In an embodiment where the button 240 is the seesaw switch, the first input may be received based on a second part for receiving the input for decreasing the volume in the button 240 and include a third input for reducing the dimension of the displaying area of the flexible display 230. In an embodiment in which the electronic device 101 includes the buttons 240 and 250, the button 250 may be a button for receiving a fourth input for initiating deformation of the electronic device 101. Based on receiving the fourth input based on the button 240, the electronic device 101 according to an embodiment may initiate driving a motor based on the first input received before the fourth input.

As described above, the electronic device 101 according to an embodiment may execute a function that changes the shape of the electronic device 101 independently of a mode of one or more processors included in the electronic device 101 by using an actuator. For example, the function that changes the shape of the electronic device 101 may be executed while the one or more processors are ceased from reacting to another function different from the above function. For example, the function that changes the shape of the electronic device 101 may be executed while the one or more processors do not receive power suitable for driving the one or more processors. For example, the function that changes the shape of the electronic device 101 may be executed based on a user input based on at least one of the buttons 240 and 250 while the one or more processors do not receive power suitable for driving the one or more processors. Since the electronic device 101 executes the function independently of the mode of the one or more processors, the user may be prevented from applying an external force (e.g., an external force for deforming the electronic device 101) to the electronic device 101. Since the user is prevented from applying the external force, irreversible deformation (or damage) of the electronic device 101 and/or the flexible display 230 due to the external force may be prevented.

Hereinafter, an example of hardware included in the electronic device 101 of FIGS. 2A to 2B will be described with reference to FIG. 3.

FIG. 3 is a block diagram of an electronic device 101 according to an embodiment. The electronic device 101 of FIG. 3 may include the electronic device 101 of FIG. 1 and/or the electronic device 101 of FIGS. 2A to 2B. Referring to FIG. 3, the electronic device 101 according to an embodiment may include at least one of a processor 120, a memory 130, an input module 150, a sensor module 176, a power management module 188, a battery 189, a flexible display 230, a motor 310, or a control circuit 320. The processor 120, the memory 130, the input module 150, the sensor module 176, the power management module 188, the battery 189, the flexible display 230, the motor 310, and the control circuit 320 may be electrically and/or operably coupled with each other by an electronical component such as a communication bus 305. Although illustrated based on different blocks, the embodiment is not limited thereto. For example, a part of a hardware component illustrated in FIG. 3 (e.g., at least a part of the processor 110, memory 120, power management module 188, and/or sensor module 176) may be included in a single integrated circuit, such as System on a Chip (SoC). The type and/or number of the hardware component included in the electronic device 101 is not limited to that illustrated in FIG. 3. For example, the electronic device 101 may include only a part of the hardware component illustrated in FIG. 3.

The processor 120 of the electronic device 101 according to an embodiment may include a hardware component for processing data based on one or more instructions. The hardware component for processing data may include, for example, an Arithmetic and Logic Unit (ALU), a Floating Point Unit (FPU), a Field Programmable Gate Array (FPGA), and/or a Central Processing Unit (CPU). The number of the processors 120 may be one or more. For example, the processor 120 may have a structure of a multi-core processor such as a dual core, a quad core, or a hexa core. The processor 120 of FIG. 3 may include the processor 120 of FIG. 1.

The memory 130 of the electronic device 101 according to an embodiment may include a hardware component for storing data and/or instruction inputted and/or outputted to the processor 120. The memory 130 may include, for example, a volatile memory such as Random-Access Memory (RAM) and/or a non-volatile memory such as Read-Only Memory (ROM). The volatile memory may include, for example, at least one of Dynamic RAM (DRAM), Static RAM (SRAM), Cache RAM, and Pseudo SRAM (PSRAM). The non-volatile memory may include, for example, at least one of Programmable ROM (PROM), Erasable PROM (EPROM), Electrically Erasable PROM (EEPROM), flash memory, hard disk, compact disk, and Embedded Multi Media Card (eMMC). The memory 130 of FIG. 3 may include the memory 130 of FIG. 1.

The input module 150 of the electronic device 101 according to an embodiment may include one or more buttons (e.g., the buttons 240 and 250 of FIG. 2) exposed to an outside in one surface of a housing (e.g., the first housing 210 and/or the second housing 220 of FIG. 2) of the electronic device 101. The one or more buttons may transmit an electrical signal based on an external force applied to the one or more buttons to hardware (e.g., the processor 120 and/or the control circuit 320 of FIG. 3) of the electronic device 101, which is distinct from the input module 150. The input module 150 of FIG. 3 may include the input module 150 of FIG. 1.

The sensor module 176 of the electronic device 101 according to an embodiment may generate electronic information that may be processed by the processor 120 and/or the memory 130 from non-electronic information related to the electronic device 101. The electrical information generated by the sensor module 176 may be stored in the memory 130, processed by the processor 120, processed by the control circuit 320, and/or transmitted to another electronic device that is distinct from the electronic device 101. Referring to FIG. 3, the sensor module 176 may be omitted according to an embodiment. The sensor module 176 of FIG. 3 may include the sensor module 176 of FIG. 1.

The sensor module 176 of the electronic device 101 according to an embodiment may include a sensor for detecting a shape of the flexible display 230 and/or the electronic device 101. Referring to FIG. 3, the electronic device 101 may include a hall sensor 330, which is an example of the sensor for detecting the shape. The hall sensor 330 may include a magnet and a magnetic sensor spaced apart from the magnet. A positional relationship between the magnet and the magnetic sensor may depend on the shape of the flexible display 230 and/or the electronic device 101. The hall sensor 330 may output an electrical signal indicating the shape based on a change in a magnetic field in the magnetic sensor according to the change in the shape. The number of the hall sensors 330 included in the electronic device 101 is not limited to an embodiment of FIG. 3. An operation performed by the electronic device 101 based on the shape of the flexible display 230 and/or the electronic device 101 measured by the hall sensor 330 according to an embodiment will be described with reference to FIGS. 9 to 12. Although the hall sensor 330 is illustrated, the embodiment is not limited thereto, and sensor for detecting the shape of the flexible display 230 and/or the electronic device 101 may include an optical sensor, a gyro sensor, an acceleration sensor, a piezoelectric sensor, and/or a variable resistor.

The power management module 188 of the electronic device 101 according to an embodiment is a hardware (e.g., the processor 120, memory 130, flexible display 230, and/or sensor module 176) of the electronic device 101 that consumes power, and may output a power signal having a voltage suitable for driving the hardware. A part of the hardware (e.g., the control circuit 320 and/or the hall sensor 330) of the electronic device 101 may be connected to the battery 189 independently of the power management module 188. In an embodiment in which the electronic device 101 includes the battery 189, the power management module 188 may output the power signal based on the power stored in the battery 189. In an embodiment in which the electronic device 101 includes the battery 189 that is a secondary battery, the power management module 188 may charge the battery 189 based on the power signal provided from an external power source (e.g., an electromagnetic field formed in an external space including power distribution system and/or the electronic device 101) of the electronic device 101. In an embodiment, the power management module 188 may include an interface for receiving power from the external power source distinct from the battery 189. For example, the interface may include a port (e.g., a USB-C type port) for receiving electrical energy from a distribution system, such as a concentric plug. The power management module 188 of FIG. 3 may include the power management module 188 of FIG. 1. In an embodiment, the power management module 188 may be referred to as system power supply circuitry. An exemplary structure of the power management module 188 included in the electronic device 101 according to an embodiment will be described later with reference to FIGS. 4A to 4B.

The battery 189 of the electronic device 101 according to an embodiment may output, from chemical energy, electrical energy to be consumed in another circuit and/or hardware in the electronic device 101. For example, the battery 189 of the electronic device 101 may include a battery cell, a battery module, or a battery pack. The battery 189 may include a capacitor or a secondary battery that stores power by charging. For example, the battery 189 may be any one of a lithium ion battery (Li-ion), a lithium ion polymer battery (Li-ion polymer), a lead storage battery, a nickel-cadmium battery (NiCd), and a nickel hydride storage battery (NiMH). The battery 189 of FIG. 3 may include the battery 189 of FIG. 1.

The flexible display 230 of the electronic device 101 according to an embodiment may output visualized information to a user. As described above with reference to FIGS. 2A to 2B, the flexible display 230 may display an image in a state of being deformed by an external force applied to the flexible display 230. The flexible display 230 may include a liquid crystal display (LCD), a plasma display panel (PDP), one or more light emitting diodes (LEDs), and/or one or more OLEDs.

The flexible display 230 of the electronic device 101 according to an embodiment may include a sensor (e.g., a touch sensor panel (TSP)) for detecting an external object (e.g., a user's finger) on the flexible display 230. For example, based on the TSP, the electronic device 101 may detect an external object that contacts the flexible display 230 or floating on the flexible display 230. In response to detecting the external object, the electronic device 101 may execute a function related to a specific visual object corresponding to a part of the flexible display 230 to which the external object is contacted among visual objects being displayed in the flexible display 230.

The motor 310 of the electronic device 101 according to an embodiment may change the shape of the flexible display 230 and/or the electronic device 101. Torque of the activated motor 310 may exceed repulsive force of the rolled flexible display 230, or friction force between the gear connected to the motor 310 or the housings (e.g., the first housing 210 and the second housing 220 of FIGS. 2A and 2B) of the electronic device 101. The motor 310 may require power for outputting the torque exceeding the repulsive force and the friction force. The number of the motors 310 included in the electronic device 101 is not limited to an embodiment of FIG. 3. The control circuit 320 of the electronic device 101 according to an embodiment may generate a power signal to be transmitted to the motor 310 based on power provided from the battery 189. The power signal transmitted from the control circuit 320 to the motor 310 may be an alternating current signal having a voltage and/or current that changes over time, such as a sine wave. The control circuit 320 may change a direction and/or speed in which the motor 310 rotates by changing the amplitude and/or frequency of the voltage and/or current of the alternating current signal. The control circuit may be referred to as a motor driving integrated circuit (IC) in terms of controlling the motor 310. In an embodiment, based on the motor 310, the shape of the flexible display 230 and/or the electronic device 101 may be adjusted between states 200 and 205 of FIGS. 2A to 2B.

The power management module 188 according to an embodiment may obtain a power signal to be transmitted to the processor 120 from the power of the battery 189. The processor 120 may enter an active mode based on the power signal transmitted from the power management module 188. The active mode may include a mode in which the processor 120 receives the power signal having a voltage exceeding a preset threshold. The active mode may include a mode in which the processor 120 supports execution of a plurality of functions based on the power signal.

In an embodiment, the mode of the processor 120 may include another mode (e.g., a sleep mode, and/or a low power mode) different from the active mode. In the other mode, the processor 120 may at least temporarily cease execution of the plurality of functions. In the other mode, the processor 120 may receive the power signal having a voltage under the preset threshold. In the other mode, transmission of the power signal to the processor by the power management module 188 may be ceased at least temporarily. In the other mode, the processor 120 may display a visual object that guides charging of the battery 189.

In an embodiment, switching between the active mode and the sleep mode may be performed based on a user's gesture of pressing a preset button (e.g., a power button) of the electronic device 101 for a time period exceeding a preset duration. The switching between the active mode and the sleep mode may be performed based on a state-of-charge (SoC) or an open circuit voltage (OCV) of the battery 189. For example, in case that a voltage of the battery 189 decreases below the preset threshold (e.g., 3.4 V), the power management module 188 may switch the mode of the processor 120 from the active mode to the sleep mode. While the mode of the processor 120 is the sleep mode, the power management module 188 may cease transmitting the power signal to the processor 120. The preset threshold may be the voltage (or OCV) of the battery 189 in a state in which the SoC of the battery 189 is substantially 0%.

The control circuit 320 of the electronic device 101 according to an embodiment may control the motor 310 based on a first control signal transmitted from the processor 120 in the active mode. After the mode of the processor 120 is switched from the active mode to the sleep mode, the control circuit 320 of the electronic device 101 may control the motor 310 independently of the processor 120. For example, the control circuit 320 may control the motor 310 based on a second control signal different from the first control signal. The second control signal may be received from one or more buttons included in the input module 150 based on an electrical connection between the input module 150 and the control circuit 320. For example, in case that the mode of the processor 120 is the active mode, the one or more buttons included in the input module 150 may be connected to the processor 120 among the control circuit 320 and the processor 120. In the above example, in response to the mode of the processor 120 being switched to the sleep mode, the one or more buttons may be connected to the control circuit 320 among the control circuit 320 and the processor 120.

The control circuit 320 according to an embodiment may detect the mode of the processor 120 based on whether an electrical connection between the power management module 188 and the processor 120 is established to supply power to the processor 120. Based on detecting that the mode of the processor 120 is the sleep mode, the control circuit 320 may be directly connected to the input module 150. The control circuit 320 directly connected to the input mode 150 may be directly controlled based on the one or more buttons included in the input module 150. The control circuit 320 directly controlled based on the one or more buttons may receive, a preset input received through the one or more buttons and for driving the motor 310, independently of the processor 120.

In an embodiment, a voltage required for driving the motor 310 may be under the preset threshold for maintaining the mode of the processor 120 in an active state. For example, in case that the voltage of the battery 189 is lower than the preset threshold, the motor 310 may be activated based on the voltage of the battery 189 even though the mode of the processor 120 is the sleep mode. The control circuit 320 may be controlled by the processor 120 during a first time period in which the mode of the processor 120 is the active mode. In order to support the driving of the motor 310 independently of the mode switching of the processor 120, the control circuit 320 may be directly connected to the input module 150 and controlled by the user during a second time period in which the mode of the processor 120 is the sleep mode.

As described above, the electronic device 101 according to an embodiment may deform the flexible display 230 and/or the electronic device 101 by activating the motor 310 independently of the mode of the processor 120. For example, in case that the SoC and/or voltage of the battery 189 do not meet a condition required for driving the processor 120, the electronic device 101 may connect the control circuit 320 connected to the motor 310 to one or more buttons by bypassing the processor 120. Since the sleep mode supports deformation of the flexible display 230 and/or the electronic device 101 based on the one or more buttons, the user may be prevented from directly deforming the flexible display 230 and/or the electronic device 101. Since the user is prevented from directly deforming the flexible display 230 and/or the electronic device 101, damage to the flexible display 230 and/or the electronic device 101 may be prevented.

Hereinafter, with reference to FIGS. 4A to 4B, a structure of the control circuit 320 selectively connected to the processor 120 or any one of the buttons of the input module 150 will be described according to the mode of the processor 120.

FIGS. 4A to 4B are block diagrams for describing a motor 310 included in an electronic device 101 and a control circuit for controlling the motor 310, according to an embodiment. The electronic device 101 of FIGS. 4A to 4B may include the electronic device 101 of FIGS. 1 to 3. For example, a processor 120, a power management module 188, a battery 189, and the motor 310 of FIG. 4A may correspond to the processor 120, the power management module 188, the battery 189, and the motor 310 of FIG. 3. For example, a control circuit 320 of FIG. 3 may include at least one of a detection circuit 430, first switch circuitry 440, a driving circuit 450, and second switch circuitry 460 of FIG. 4A.

Referring to FIG. 4A, the power management module 188 may include a first PMIC 410 and a second PMIC 420. The first PMIC 410 may be referred to as an interface (IF) PMIC. The first PMIC 410 may charge the battery 189 based on power supplied through a wired interface (e.g., a USB-C port) and/or a wireless interface. The first PMIC 410 may include a switch 415 for adjusting an electrical connection between the battery 189 and the second PMIC 420. Referring to FIG. 4A, the switch 415 may include one end connected to a node 402 extending from the cathode of the battery 189 and another end connected to a node 404 extending from the second PMIC 420. The electrical connection between the one end and the other end of the switch 415 may be adjusted by the first PMIC 410. For example, while a mode of the processor 120 is an active mode, the first PMIC 410 may apply a voltage of the battery 189 to the node 404 by controlling the switch 415.

The second PMIC 420 of the power management module 188 according to an embodiment may generate a power signal for driving the processor 120 based on power of the battery 189 received through the node 404. The power signal may be transmitted from the power management module 188 to the processor 120. The power signal may be transmitted from the second PMIC 420 to the processor 120 while the mode of the processor 120 is the active mode. While the mode of the processor 120 is another mode (e.g., the sleep mode) different from the active mode, the first PMIC 410 may cease the voltage Vb of the battery 189 from being applied to the node 404 by controlling the switch 415. Since the voltage Vb of the battery 189 being applied to the node 404 is ceased, transmission of the power signal from the second PMIC 420 to the processor 120 may be ceased. For example, the node 404 may be included in an electrical path for supplying power stored in the battery 189 to the processor 120.

The control circuit (e.g., the control circuit 320 of FIG. 3) of the motor 310 according to an embodiment may obtain the power of the battery 189 through a second path different from the first path established by the power management module 188. The first path may include the node 404 and may be an electrical path for supplying power stored in the battery 189 to the processor 120. Referring to FIG. 4A, the control circuit may receive the voltage Vb of the battery 189 independently of the first PMIC 410 and/or the switch 415 through the node 402. The node 402 may be connected to the detection circuit 430, the first switch circuitry 440, the driving circuit 450, and/or the second switch circuitry 460 included in the control circuit. An electric power supplying loop for supplying the power of the battery 189 to the motor 310 and/or the driving circuit 450 may be formed by the node 402.

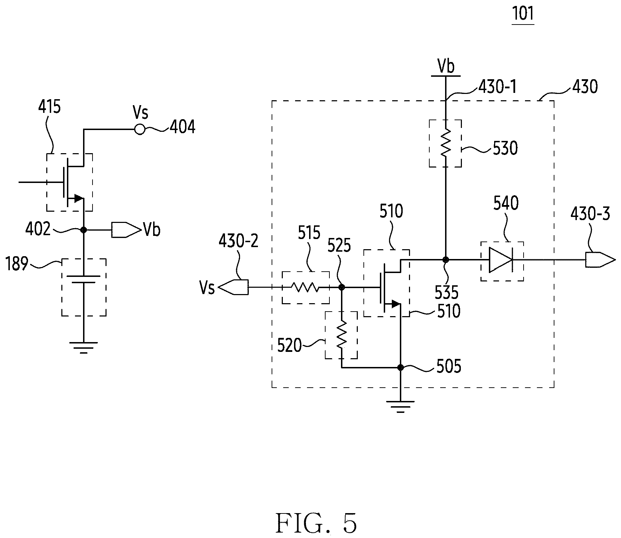

Referring to FIG. 4A, the detection circuit 430 according to an embodiment may include one end 430-1 connected to the node 402 and one end 430-2 connected to the node 404. The detection circuit 430 may be activated independently from the mode of the processor 120 based on the voltage Vb of the battery 189 applied at the one end 430-1. The detection circuit 430 may detect a voltage Vs of the node 404 through the one end 430-2. The detection circuit 430 may be referred to as system power check circuitry. The detection circuit 430 may output an electrical signal indicating a result of detecting the voltage Vs of the node 404 through one end 430-3. An exemplary structure of the detection circuit 430 will be described with reference to FIG. 5.

For example, through the one end 430-3, the detection circuit 430 may output an electrical signal (e.g., an enable signal) indicating whether the node 404 is electrically separated from the battery 189 based on the switch 415. The fact that the node 404 is electrically separated from the battery 189 may mean that the second PMIC 420 has ceased transmitting the power signal to the processor 120. The fact that the node 404 is electrically separated from the battery 189 may mean that the mode of the processor 120 is the sleep mode. Referring to FIG. 4A, the electrical signal may be transmitted to the first switch circuitry 440 and the second switch circuitry 460.

Referring to FIG. 4A, the first switch circuitry 440 according to an embodiment may include one end 440-1 connected to the node 402 and one end 440-2 connected to the one end 430-3 of the detection circuit 430. The first switch circuitry 440 may receive the electrical signal indicating whether the node 404 is electrically separated from the battery 189 from the detection circuit 430 through the one end 440-2. The electrical signal that the first switch circuitry 440 receives from the detection circuit 430 may be a control signal for adjusting a state of the first switch circuitry 440.

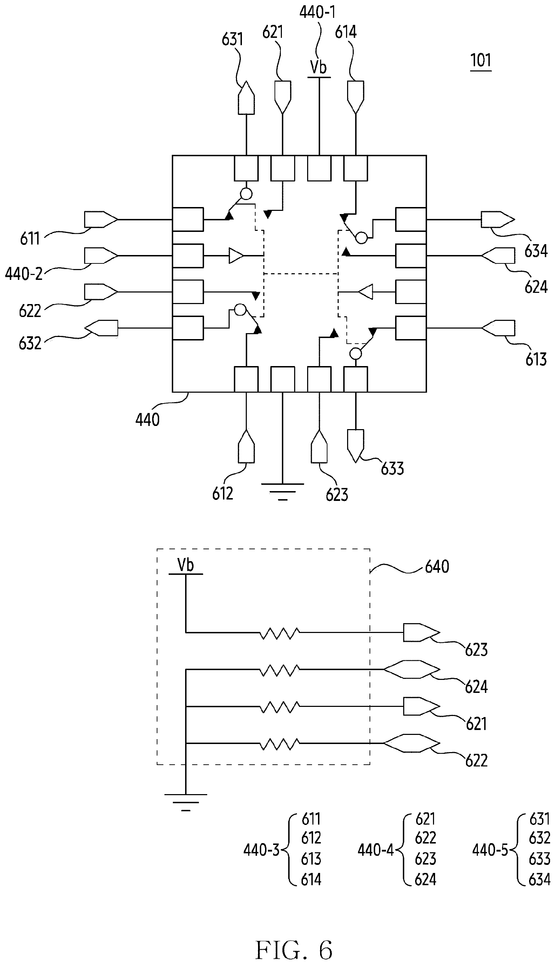

For example, the first switch circuitry 440 may output a control signal selected by the electrical signal received from the detection circuit 430 among control signals S1 and S2 received from ports 440-3 and 440-4, through a port 440-5. Referring to FIG. 4A, the port 440-5 may be connected to the driving circuit 450 of the control circuit. For example, in case that the electrical signal received from the detection circuit 430 has a first voltage indicating that the node 404 is electrically connected to the battery 189, the first switch circuitry 440 may output a first control signal S1 received from the port 440-3 among the ports 440-3 and 440-4 to the port 440-5. In case that the electrical signal received from the detection circuit 430 has a second voltage indicating that the node 404 is electrically separated from the battery 189, the first switch circuitry 440 may output a second control signal S2 received from the port 440-4 among the ports 440-3 and 440-4 to the port 440-5. The first switch circuitry 440 may be a multiplexer that selects one port to be connected to the port 440-5 from among the ports 440-3 and 440-4. A structure of the first switch circuitry 440 according to an embodiment will be described with reference to FIG. 6.

Referring to FIG. 4A, the second switch circuitry 460 according to an embodiment may include one end 460-5 connected to the node 402 and one end 460-3 connected to the one end 430-3 of the detection circuit 430. The second switch circuitry 460 may selectively output an electrical signal received from a port 460-1 to any one of ports 460-2 and 460-4, based on the electrical signal received from the detection circuit 430 through the one end 460-3. The port 460-1 of the second switch circuitry 460 may be electrically connected to one or more buttons (e.g., the buttons 240 and 250 of FIG. 1) of the electronic device 101. The port 460-2 of the second switch circuitry 460 may be electrically connected to the processor 120. The port 460-4 of the second switch circuitry 460 may be electrically connected to the port 440-4 of the first switch circuitry 440.

For example, one port connected to the port 460-1 among the ports 460-2 and 460-4 may be selected based on whether the voltage of the battery 189 is applied to the node 404. For example, in case that the electrical signal received from the detection circuit 430 has the first voltage indicating that the node 404 is electrically connected to the battery 189, the second switch circuitry 460 may connect the port 460-2 among the ports 460-2 and 460-4 to the port 460-1. In case that the electrical signal received from the detection circuit 430 has the second voltage indicating that the node 404 is electrically separated from the battery 189, the second switch circuitry 460 may connect the port 460-4 among the ports 460-2 and 460-4 to the port 460-1.

Referring to FIG. 4A, the electrical signal of the port 460-1 may be selectively transmitted by the first switch circuitry 440 and the second switch circuitry 460 to any one of the processor 120 or a port 450-2 of the driving circuit 450. For example, in case that the battery 189 and the node 404 are electrically connected, the electrical signal of the port 460-1 may be transmitted to the processor 120 through the second switch circuitry 460. For example, in case that the battery 189 and the node 404 are electrically separated, the electrical signal of the port 460-1 may be transmitted to the port 450-2 through the second switch circuitry 460 and the first switch circuitry 440. Referring to FIG. 4A, since the port 460-1 is connected to one or more buttons of the electronic device 101, in a state (e.g., the sleep mode) in which the battery 189 and the node 404 are electrically separated, the one or more buttons may be electrically connected to the driving circuit 450 of the motor 310 through the port 450-2 by bypassing the processor 120.

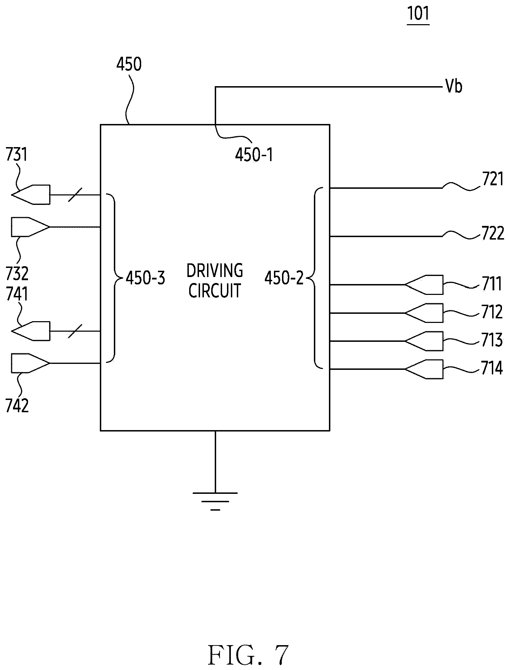

Referring to FIG. 4A, the driving circuit 450 of the control circuit according to an embodiment may include one end 450-1 connected to the node 402. Since the driving circuit 450 is connected to the battery 189 through the node 402, the driving circuit 450 may obtain power for driving the motor 310 independently of the power management module 188. The driving circuit 450 may include the port 450-2 connected to the port 440-5 of the first switch circuitry 440 and a port 450-3 connected to the motor 310. Based on a control signal received through the port 450-2, the driving circuit 450 may change a voltage and/or current of a power signal applied to the port 450-3 connected to the motor 310. For example, the driving circuit 450 may adjust rotation direction and/or rotation speed of the motor 310 based on the control signal received through the port 450-2. An exemplary structure and operation of the driving circuit 450 will be described with reference to FIG. 7.

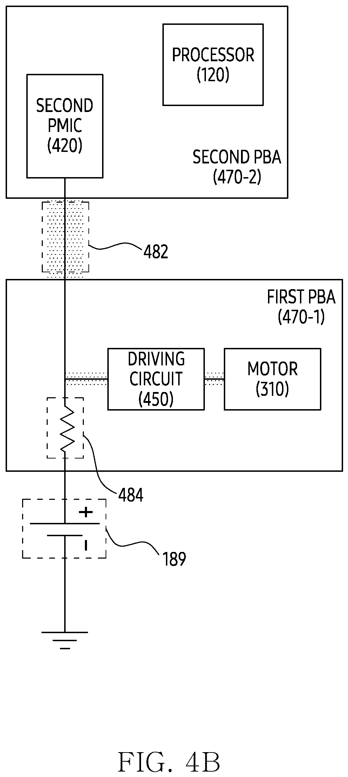

Referring to FIG. 4B, the electronic device 101 according to an embodiment may include printed board assembled (PBAs) (e.g., a first PBA 470-1 and a second PBA 470-2) on which hardware is disposed. The first PBA 470-1 may be coupled to a first housing (e.g., the first housing 210 of FIGS. 2A to 2B) of the electronic device 101 where the battery 189 is disposed. The second PBA 470-2 may be coupled to a second housing (e.g., the second housing 220 of FIGS. 2A to 2B). The driving circuit 450 may be disposed on the first PBA 470-1. The motor 310 may be disposed on the first PBA 470-1 or may be disposed at a position independent of the first PBA 470-1. The electronic device 101 may include a resistor 484 disposed on the first PBA 470-1 and connected to one end of the battery 189. Based on a current flowing through the resistor 484 and/or a voltage applied to the resistor 484, the electronic device 101 may detect power outputted from the battery 189.

The electronic device 101 according to an embodiment may include an FPCB 482 for establishing an electrical connection between the first PBA 470-1 and the second PBA 470-2 disposed in different housings. Based on the FPCB 482, the power of the battery 189 may be transmitted to the second PBA 470-2 independently of deformation of the electronic device 101. The power transmitted to the second PBA 470-2 may be used for driving the processor 120. To prevent the power provided to the motor 310 from being reduced by resistance (e.g., direct current resistance (DCR)) of the FPCB 482, referring to FIG. 4B, the motor 310 may be connected to the battery 189 through a path independent of the FPCB 482. Since the motor 310 is connected to the battery 189 through a path different from the path (e.g., a path formed by the FPCB 482) through which the power for driving the processor 120 is transmitted, the motor 310 may operate independently of whether the processor 120 is activated.

As described above, the electronic device 101 according to an embodiment may selectively transmit an electrical signal received from one or more buttons to either the processor 120 or the driving circuit 450 through the first switch circuitry 440 and the second switch circuitry 460. For example, based on the mode of the processor 120 detected by the detection circuit 430, the electronic device 101 may connect one or more buttons to the processor 120 or the driving circuit 450. For example, an electrical signal SWin received from a button for adjusting volume of the electronic device 101 may be transmitted to either the processor 120 or the driving circuit 450 according to the mode of the processor 120.

In the above example, the electrical signal SWin may be transmitted to the processor 120 while the processor 120 is in the active mode. The processor 120 in the active mode may adjust volume of a speaker included in the electronic device 101 based on the electrical signal SWin. In the above example, the electrical signal SWin may be transmitted to the driving circuit 450 while the processor 120 is in the sleep mode. The driving circuit 450 may control the motor 310 based on the electrical signal SWin. For example, while the processor 120 is in the sleep mode, the button for adjusting the volume of the electronic device 101 may be mapped to a function for deforming the electronic device 101 or a flexible display (e.g., the flexible display 230 of FIG. 3) based on the motor 310. For example, the electronic device 101 may be actively deformed independently of controlling the processor 120.

Hereinafter, with reference to FIGS. 5 to 7, the structure of each of the detection circuit 320, the first switch circuitry 440, and the driving circuit 450 of FIGS. 4A to 4B will be described.

FIG. 5 is an exemplary circuit diagram of a detection circuit 430 connected to a power management module in a control circuit of an electronic device 101, according to an embodiment. The electronic device 101 of FIG. 5 may include the electronic device 101 of FIGS. 1 to 3 and 4A to 4. For example, the power management module may include the power management module 188 of FIG. 4A. For example, a battery 189 of FIG. 5 may include the battery 189 of FIGS. 3 and 4A to 4B. For example, nodes 402 and 404 and a switch 415 of FIG. 5 may include the nodes 402 and 404 and the switch 415 of FIG. 4A.

Referring to FIG. 5, the switch 415 included in the power management module of the electronic device 101 according to an embodiment may be a transistor (e.g., an N-channel metal oxide semiconductor field effect transistor (MOSFET)). Although an embodiment including the N-channel MOSFET is illustrated, the embodiment is not limited thereto. For example, the switch 415 may include a P-channel MOSFET, a metal-insulator semiconductor FET (MISFET), and/or a bipolar junction transistor (BJT). A first PMIC (e.g., the first PMIC 410 of FIG. 4A) of the power management module may apply a voltage to be adjusted according to a mode of a processor 120 to a gate of the switch 415. For example, while the mode of the processor 120 is an active mode, the first PMIC may apply a voltage exceeding a threshold voltage of the N-channel MOSFET to the gate of the switch 415. For example, while the mode of the processor 120 is a sleep mode, the first PMIC may apply a voltage under the threshold voltage to the gate of the switch 415.

Referring to FIG. 5, the detection circuit 430 included in the control circuit of the electronic device 101 according to an embodiment may include a switch 510 that is activated according to a voltage applied to one end 430-2 of the detection circuit 430. In an embodiment of FIG. 5 in which the switch 510 includes the N-channel MOSFET, a gate of the switch 510 may receive a voltage of the one end 430-2 adjusted by a voltage distribution circuit based on a series connection of resistors 515 and 520, through a node 525. As described above, since the one end 430-2 of the detection circuit 430 is connected to the node 404, the switch 510 may be activated according to a voltage of the node 404. For example, the switch 510 may be activated while the voltage of the node 404 matches a voltage of the battery 189 by the switch 415.

Referring to FIG. 5, in an embodiment of FIG. 5 in which the switch 510 includes the N-channel MOSFET, a source of the switch 510 may be connected to a ground node 505, and a drain of the switch 510 may be connected to a node 535. The detection circuit 430 may include a resistor 530 connecting one end 430-1 of the detection circuit 430 and the node 535. The one end 430-1 of the detection circuit 430 may be connected to the node 402 extending from the cathode of the battery 189. For example, a voltage Vb of the battery 189 may be applied to the one end 430-1. The detection circuit 430 may include a diode 540 including an anode connected to the node 535 and a cathode connected to one end 430-3 of the detection circuit 430. Since the node 535 and the node 505 are electrically connected while the switch 510 is activated, flowing of a current received from the battery 189 through the one end 430-1 to the one end 430-3 may be blocked by the diode 540. While the switch 510 is deactivated, as the node 535 is electrically separated from the node 505, the current received from the battery 189 through the one end 430-1 may flow to the one end 430-3. Since the switch 510 is activated based on a voltage Vs of the node 404, the detection circuit 430 may change a voltage and/or current of the one end 430-3 based on the voltage Vs.

The detection circuit 430 of the control circuit according to an embodiment may output a current outputted from the battery 189 through the one end 430-3 while the node 404 is electrically separated from the battery 189. For example, through the one end 430-3, the detection circuit 430 may output an electrical signal indicating that the node 404 is electrically separated from the battery 189. Separation of the node 404 from the battery 189 may be performed by the switch 415. Controlling the switch 415 by the power management module of the electronic device 101 may be performed to switch the mode of the processor (e.g., the processor 120 of FIGS. 3 and 4A to 4B) between the active mode and the sleep mode. For example, in case that the SoC or voltage of the battery 189 satisfies a condition for switching to the sleep mode, the electronic device 101 may electrically insulate the node 404 and the battery 189 by controlling the switch 415. The condition may include, for example, whether the voltage of the battery 189 is lower than a preset threshold (e.g., 3.4 V).

As described above, the control circuit of the electronic device 101 according to an embodiment may detect the voltage of the node 404 by using the detection circuit 430. The node 404 may be included in an electrical path between the battery 189 and the processor (e.g., the processor 120 of FIGS. 4A to 4B) of the electronic device 101. For example, the voltage of the node 404 may be changed according to whether the electrical path is established by the power management module of the electronic device 101. By using the detection circuit 430, the control circuit of the electronic device 101 may detect whether the electrical path is established by a power circuit of the electronic device 101, such as the power management module.

Hereinafter, a structure of switch circuitry (e.g., the first switch circuitry 440 of FIG. 4A) of the control circuit connected to the one end 430-3 of the detection circuit 430 will be described with reference to FIG. 6.

FIG. 6 is an exemplary circuit diagram of first switch circuitry 440 for processing control signals in a control circuit of an electronic device 101, according to an embodiment. The electronic device 101 of FIG. 6 may include the electronic device 101 of FIGS. 1 to 5. For example, the first switch circuitry 440 of FIG. 6 may include the first switch circuitry 440 of FIG. 4A.

Referring to FIG. 6, an embodiment in which the first switch circuitry 440 is implemented based on an integrated circuit is illustrated. The first switch circuitry 440 may be activated based on a voltage (e.g., the voltage Vb of the battery 189 of FIGS. 4A to 4B) received through one end 440-1. The first switch circuitry 440 may connect any one of ports 440-3 and 440-4 to a port 440-5, based on an electrical signal (e.g., the electrical signal received from the one end 430-3 of the detection circuit 430 of FIG. 4A and/or FIG. 5) received through one end 440-2.

Referring to FIG. 6, an embodiment in which the first switch circuitry 440 controls a connection between the ports 440-3, 440-4, and 440-5 of four channels is illustrated. The four channels may include one or more parameters to be input to a driving circuit (e.g., the driving circuit 450 of FIGS. 4A to 4B) of the control circuit. Pins 611, 612, 613, and 614 of the first switch circuitry 440 may correspond to each of the four channels of the port 440-3. Pins 621, 622, 623, and 624 of the first switch circuitry 440 may correspond to each of the four channels of the port 440-4. Pins 631, 632, 633, and 634 of the first switch circuitry 440 may correspond to each of the four channels of the port 440-5.

As described above in FIG. 4A, the first switch circuitry 440 may electrically connect one port, which is selected by an electrical signal received through the one end 440-2, among the ports 440-3 and 440-4, to the port 440-5. Referring to FIG. 6, an electrical connection of the first switch circuitry 440 in a state in which the electrical signal is not received through the one end 440-2 is illustrated. Referring to FIG. 5, while power supplied from the battery 189 is provided to a processor, the detection circuit 430 may cease outputting the electrical signal to the one end 430-3. Referring to FIG. 4A, since the one end 440-2 of the first switch circuitry 440 is connected to the one end 430-3 of the detection circuit 430, a mode of a processor 120 may be an active mode in a state in which the electrical signal is not received through the one end 440-2. For example, the electrical connection of the first switch circuitry 440 while the mode of the processor 120 is the active mode is illustrated in FIG. 6.

Referring to FIG. 6, while the mode of the processor 120 is in the active mode, the pins 611, 612, 613, and 614 included in the port 440-3 may be electrically connected to each of the pins 631, 632, 633, and 634 of the port 440-5. Referring to FIG. 4A, since the port 440-3 is connected to the processor 120, a control signal S1 transmitted from the processor 120 may be transmitted from the port 440-3 to the port 440-5 while the mode of the processor 120 is in the active mode. The port 440-3 including the pins 611, 612, 613, and 614 may be electrically connected to a preset port (e.g., General Purpose Input Output (GPIO)) for input and output of the processor.

The first switch circuitry 440 according to an embodiment may electrically connect the port 440-4, which is different from the port 440-3 connected to the processor, to the port 440-5 while the mode of the processor is in a sleep mode. For example, while the mode of the processor is in the sleep mode, the pins 621, 622, 623, and 624 included in the port 440-4 may be electrically connected to each of the pins 631, 632, 633, and 634 of the port 440-5. Referring to an embodiment of FIG. 4A, the port 440-4 may be electrically connected to one or more buttons of the electronic device 101 through second switch circuitry 460.

Referring to FIG. 6, the pins 621, 622, 623, and 624 included in the port 440-4 of the first switch circuitry 440 according to an embodiment may be connected to a circuit 640 for outputting a preset electrical signal. Referring to FIG. 6, the circuit 640 may output a control signal to be transmitted to the driving circuit based on the voltage Vb of the battery or a voltage of a ground node. In an embodiment, the circuit 640 may be referred to as a pull-up circuit and/or a pull-down circuit. The control signal outputted based on the circuit 640 may indicate parameters for adjusting a rotation direction and/or rotation step of the motor connected to the driving circuit based on the voltage Vb of the battery or the voltage of the ground node. In an embodiment in which the circuit 640 is connected to the first switch circuitry 440 through the port 440-4, the control signal outputted from the circuit 640 may be transmitted to the driving circuit through the first switch circuitry 440 while the mode of the processor is in the sleep mode.

As described above, the first switch circuitry 440 included in the control circuit of the electronic device 101 according to an embodiment may selectively output control signals based on one or more channels based on the mode of the processor. The control signal selected by the first switch circuitry 440 may be transmitted to the driving circuit of the control circuit. The first switch circuitry 440 activated independently of the processor may connect the processor and the driving circuit in a first time period in which the processor is activated. The first switch circuitry 440 may connect the circuit 640, and/or one or more buttons, and the driving circuit in a second time period in which the processor is deactivated. By using the first switch circuitry 440, the electronic device 101 according to an embodiment may control the motor by using the driving circuit in the entire first time period and second time period. For example, the electronic device 101 may deform a flexible display (e.g., the flexible display 230 of FIGS. 2 to 3) and/or the electronic device 101 by using the motor in the entire first time period and the second time period.

Hereinafter, with reference to FIG. 7, a structure of the driving circuit connected to the port 440-5 of the first switch circuitry 440 will be described.

FIG. 7 is an exemplary circuit diagram of a driving circuit 450 connected to a motor of an electronic device 101 in a control circuit of the electronic device, according to an embodiment. The electronic device 101 of FIG. 7 may include the electronic device 101 of FIGS. 1 to 6. For example, the driving circuit 450 of FIG. 7 may include the driving circuit 450 of FIGS. 4A to 4B.

Referring to FIG. 7, an embodiment in which the driving circuit 450 is implemented based on an integrated circuit is illustrated. The driving circuit 450 may be activated based on a voltage (e.g., the voltage Vb of the battery 189 of FIGS. 4A to 4B) received through one end 450-1. The driving circuit 450 may output an AC signal for driving a motor (e.g., the motor 310 of FIGS. 3 and 4A to 4B) to a port 450-3 based on a control signal received through a port 450-2. Based on the control signal, the driving circuit 450 may change amplitude and/or frequency of a voltage of the AC signal. The driving circuit 450 may output the AC signal for driving the motor from a direct current voltage (e.g., the voltage Vb) applied to the one end 450-1.

Referring to FIG. 7, the port 450-2 of the driving circuit 450 may include pins 711, 712, 713, and 714 for receiving parameters indicating a rotation direction and/or rotation step of the motor connected to the driving circuit 450, a pin 721 for receiving an electrical signal indicating when to receive the parameters, and a pin 722 for receiving an electrical signal indicating activation of the motor based on the parameters. Referring to FIG. 4A, the port 450-2 of the driving circuit 450 may be connected to a processor 120 or may be connected to one or more buttons by bypassing the processor 120 based on whether the processor 120 is in an active mode. For example, the pins 711, 712, 713, and 714 of the port 450-2 may be selectively connected to the processor 120 or the one or more buttons through a first switch 440 of FIG. 6 by being connected to each of pins 631, 632, 633, and 634 of FIG. 6.

The driving circuit 450 of the control circuit according to an embodiment may detect parameters received through the pins 711, 712, 713, and 714 at a time point indicated by the electrical signal received through the pin 721. For example, the time point may be included in a time period in which a voltage applied to the pin 721 exceeds a preset threshold. The parameters received through the pins 711, 712, 713, and 714 may indicate the rotation direction and/or rotation step of the motor based on a binarized voltage. For example, through the pin 711, the driving circuit 450 may obtain a bit indicating the rotation direction of the motor. For example, through the pin 712, the driving circuit 450 may receive a step clock (STCK) of the motor. For example, through the pins 713 and 714, the driving circuit 450 may obtain bits indicating the rotation step of the motor. Each of the pins 713 and 714 may correspond to a most significant bit (MSB) and a least significant bit (LSB) of the bits. The rotation step of the motor may be adjusted based on a multiple of a unit step of the motor (e.g., 1/2 step, 1/128 step, 1/256 step, or 1/32 step) indicated by the bits.

The driving circuit 450 of the control circuit according to an embodiment may output an AC signal to the port 450-3 based on an electrical signal received through the pin 722 after storing the parameters received through the pins 711, 712, 713, and 714. For example, while a voltage applied to the pin 722 exceeds the preset threshold, the driving circuit 450 may output the AC signal to the port 450-3. The driving circuit 450 may generate the AC signal based on the voltage applied to the one end 450-1. Referring to FIG. 4A, since the one end 450-1 of the driving circuit 450 is connected to the battery 189 independently of a switch 415 for establishing or blocking an electrical connection based on a mode of the processor 120, the driving circuit 450 may output the AC signal independently of the electrical connection. The AC signal outputted by the driving circuit 450 to the port 450-3 may be adjusted by the parameters.

Referring to FIG. 7, pins 731 and 741 of the port 450-3 may be connected to each of different coils of the motor connected to the driving circuit 450. The driving circuit 450 may control the coils by outputting AC signals to each of the pins 731 and 741. In an embodiment in which the driving circuit 450 outputs the AC signals to different coils through the pins 731 and 741, the driving circuit 450 may change at least one of the rotation direction, the rotation step, or a rotation speed of the motor including the coils by adjusting a phase difference of the AC signals. The driving circuit 450 may detect the state of each of the coils through pins 732 and 742.

In an embodiment, activating the motor based on parameters received through the pins 711, 712, 713, and 714 by the driving circuit 450 of the control circuit may be performed by an electrical signal that is received through the pin 722 within a preset time period from the time point at which the parameters are received and requests driving of the motor. In case that the preset time period is exceeded, the driving circuit 450 may control the motor independently of the parameters.

As described above, the driving circuit 450 of the control circuit according to an embodiment may output an AC signal for activating the motor based on the control signal received through the port 450-2. An embodiment in which the driving circuit 450 receives parameters for driving the motor by using four channels such as the pins 711, 712, 713, and 714, obtains the parameters by using the pins 721 and 722, and performs driving of the motor is described, but the embodiment is not limited thereto. For example, the driving circuit 450 may receive the parameters based on a number of channels other than the four channels.

In an embodiment, while the processor is in a sleep mode, the pins 721 and 722 of the driving circuit 450 may be electrically connected to different buttons (e.g., the buttons 240 and 250 of FIGS. 2A to 2B) of the electronic device 101. For example, the pin 721 may be connected to a first preset button for increasing volume, among the buttons of the electronic device 101. For example, the pin 722 may be connected to a second preset button for decreasing the volume. In the above example, in response to receiving an electrical signal indicating that a user presses the first preset button, the driving circuit 450 may obtain parameters indicated by voltages applied to the pins 711, 712, 713, and 714. In the above example, in response to receiving an electrical signal indicating that the user presses the second preset button, the driving circuit 450 may output an AC signal based on the obtained parameters to the motor through the port 450-3. In the above example, in order to trigger a deformation of a flexible display and/or the electronic device 101 based on the motor, pressing the first preset button and the second preset button sequentially may be required.

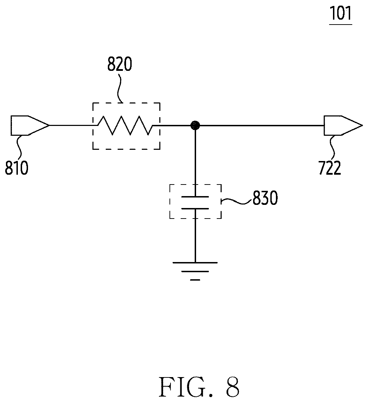

In an embodiment of the electronic device 101 including the driving circuit 450 of FIG. 7, the control circuit of the electronic device 101 may transmit electrical signals to each of the pins 721 and 722 based on a user input of pressing a button once, by using an additional circuit. Hereinafter, by using FIG. 8, the additional circuit that changes the voltage applied to each of the pins 721 and 722 will be described based on the user input of pressing the button once.

FIG. 8 is an exemplary circuit diagram of a signal processing circuit for processing an electrical signal received from a button in an electronic device 101, according to an embodiment. The electronic device 101 of FIG. 8 may include the electronic device 101 of FIGS. 1 to 7. For example, the button may be any one of buttons 240 and 250 of FIGS. 2A to 2B.

One end 810 of the signal processing circuit of FIG. 8 may be electrically connected to a preset button of the electronic device 101. One end 722 of the signal processing circuit of FIG. 8 may be connected to a driving circuit of FIG. 7. For example, the one end 722 of the signal processing circuit may be connected to a pin 722 of FIG. 7. Hereinafter, while a mode of a processor of the electronic device 101 is in a sleep mode, operation of the signal processing circuit based on a user input of pressing the preset button electrically connected to the one end 810 will be described.

Referring to FIG. 8, as the one end 722 of the signal processing circuit is connected to the one end 810 through a resistor 820 and a capacitor 830, a voltage of the one end 722 may be delayed than a voltage of the one end 810. For example, at a second time point after a first time point at which the voltage of the end 810 is increased by the user input, the voltage of the one end 722 may be increased by the increased voltage. For example, the signal processing circuit of FIG. 8 may be a delay circuit.

The signal processing circuit of FIG. 8 may cause driving of a motor based on a single button by being connected to the driving circuit 450 of FIG. 7. For example, the preset button may be directly connected to a pin 721 of the driving circuit 450 of FIG. 7 and indirectly connected to the pin 722 through the one end 810 of the signal processing circuit of FIG. 8. In the above example, as an electrical signal based on the preset button is transmitted to the pin 721 of FIG. 7 at the first time point when the preset button is pressed, the driving circuit 450 of FIG. 7 may obtain parameters indicated by pins 711, 712, 713, and 714. At the first time point, the voltage of the one end 810 of the signal processing circuit may increase. Based on a delay caused by the capacitor 830 of the signal processing circuit, the voltage of the one end 722 of the signal processing circuit may increase at the second time point after the first time point. As the one end 722 of FIG. 8 is connected to the pin 722 of FIG. 7, at the second time point, the driving circuit 450 of FIG. 7 may initiate outputting an AC signal through a port 450-3 based on the increased voltage of the pin 722.

As described above, the electronic device 101 according to an embodiment may drive the motor while the mode of the processor is in the sleep mode based on a user input including continuous gestures related to buttons or a single gesture. Driving the motor by the electronic device 101 may be performed for deforming the electronic device 101 independently of the mode. For example, in case that the electronic device 101 includes an interface (e.g., a USB-C port, an SD card slot, and/or a subscriber identification module (SIM) card slot) connectable in a specific shape, the electronic device 101 may be changed to the specific shape independently of the above mode by using a control circuit.

Hereinafter, with reference to FIGS. 9 to 10, an embodiment of the electronic device 101 including a sensor for detecting whether a shape of the electronic device 101 corresponds to the specific shape will be described.

FIG. 9 is an exemplary diagram for describing an operation performed by an electronic device 101 based on a sensor for detecting an arrangement of housings, according to an embodiment. The electronic device 101 of FIG. 9 may include the electronic device 101 of FIGS. 1 to 8. For example, a first housing 210 and a second housing 220 of FIG. 9 may include the first housing 210 and the second housing 220 of FIGS. 2A to 2B. For example, a flexible display 230 of FIG. 9 may include the flexible display 230 of FIG. 3. For example, the sensor may include a hall sensor 330 of FIG. 3.

Referring to FIG. 9, an exemplary position of a magnet 930 and a magnetic sensor 920 disposed in the electronic device 101 and composing the hall sensor 330 of FIG. 3 according to an embodiment is illustrated. The magnet 930 and the magnetic sensor 920 may be disposed in different housings of the electronic device 101. Referring to FIG. 9, an embodiment in which the magnet 930 and the magnetic sensor 920 are disposed in each of the first housing 210 and the second housing 220 of the electronic device 101 is illustrated. A disposition relationship between the magnet 930, the magnetic sensor 920, the first housing 210 and the second housing 220 is not limited to an embodiment of FIG. 9.

States 200 and 205 of FIG. 9 may match the states 200 and 205 of FIGS. 2A to 2B. For example, the state 200 may correspond to a slide-in state of the electronic device 101. For example, the state 205 may correspond to a slide-out state of the electronic device 101. A state 900 of FIG. 9 may be an intermediate state between the slide-in state and the slide-out state. Referring to FIG. 9, as the magnet 930 and the magnetic sensor 920 are disposed in the first housing 210 and the second housing 220, respectively, in each of the states 200, 900, and 205, a distance between the magnet 930 and the magnetic sensor 920 may be adjusted. A control circuit of the electronic device 101 according to an embodiment may detect the distance by using the magnetic sensor 920.

The electronic device 101 according to an embodiment may include an interface 910 formed in the second housing 220 that is insertable into the first housing 210. Referring to FIG. 9, an example is illustrated in which the interface 910 is formed on a second surface (e.g., a side surface) different from a first surface (e.g., a front surface) of the second housing 220 on which the flexible display 230 is formed. A position of the interface 910 is not limited to an embodiment of FIG. 9, and may be disposed on another surface different from the second surface. The interface 910 may include at least one of a USB-C port, an SD card slot, or an SIM card slot. Since the interface 910 is formed in the second housing 220 that is insertable into the first housing 210, the interface 910 may be at least temporarily, or at least partially covered by the first housing 210.

Referring to FIG. 9, in the slide-in state 200, the interface 910 may be covered by the first housing 210 based on the second housing 220 inserted into the first housing 210. In the state 900 and/or the state 205, the interface 910 may be exposed to an outside based on the second housing 220 at least partially extracted from the first housing 210. For example, the state 900 may be an intermediate state in which a dimension of a displaying area of the flexible display 230 is minimal among intermediate states in which the entire area of the interface 910 is exposed to the outside.

In an embodiment in which the interface 910 includes the USB-C port, in case that the electronic device 101 is discharged, the electronic device 101 may deform the electronic device 101 based on a control circuit 320 of FIG. 3 to support charging of the electronic device 101 based on the interface 910. For example, while a mode of a processor (e.g., the processor 120 of FIG. 3) is in a sleep mode, the electronic device 101 may support charging of the electronic device 101 based on the interface 910 by switching from the state 200 to the state 900. Referring to FIG. 9, the magnet 930 and the magnetic sensor 920 may be disposed on each of the first housing 210 and the second housing 220 so as to overlap in the state 900. In this case, in the state 900, a voltage and/or current of an electrical signal outputted from the magnetic sensor 920 may have either a minimum value or a maximum value.

For example, in response to receiving a user input for deforming the electronic device 101, the control circuit of the electronic device 101 may initiate deformation of the electronic device 101 by controlling the motor. In case that the electronic device 101 is deformed from the state 200, the electronic device 101 may detect whether the electronic device 101 switches to the state 900 by using the magnet 930 and the magnetic sensor 920. The electronic device 101 may detect entering a state 900 in which the magnet 930 and the magnetic sensor 920 are overlapped to each other by using the electrical signal outputted from the magnetic sensor 920. Based on detecting entry into the state 900, the electronic device 101 may maintain the state 900 by deactivating the motor.

As described above, the magnetic sensor 920 of the electronic device 101 may inform the control circuit whether being switched to the state 900 independently of the mode of the processor by being connected to the control circuit (e.g., the control circuit 320 of FIG. 3) for driving the motor. Whether the voltage and/or current of the electrical signal outputted from the magnetic sensor 920 is the minimum value or the maximum value may be detected independently from a circuit such as an analog-digital converter (ADC). Since the electronic device 101 controls the motor based on whether being entered to the state 900, the interface 910 may be exposed to the outside independently of the mode of the processor.

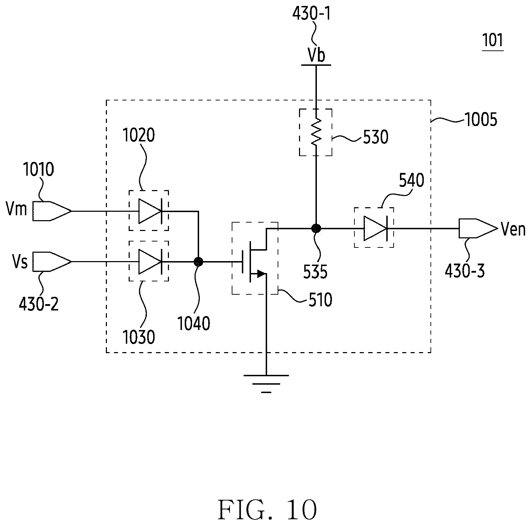

Hereinafter, with reference to FIG. 10, a structure of a control circuit that operates based on the electrical signal outputted from the magnetic sensor 920 of FIG. 9 will be described.

FIG. 10 is an exemplary circuit diagram of a detection circuit 1005 connected to a sensor in a control circuit of an electronic device 101 of FIG. 9. The electronic device 101 of FIG. 10 may include the electronic device 101 of FIG. 9. For example, the detection circuit 1005 of FIG. 10 may be an example of a detection circuit 430 of FIG. 4A. A switch 510, a resistor 530, and a diode 540 of the detection circuit 1005 of FIG. 10 may match the switch 510, the resistor 530, and the diode 540 of FIG. 5. Ends 430-1, 430-2, and 430-3 of the detection circuit 1005 of FIG. 10 may correspond to the ends 430-1, 430-2, and 430-3 of FIG. 4A, respectively.

In an embodiment of FIG. 10 in which the switch 510 of the detection circuit 1005 includes a transistor (e.g., an N-channel MOSFET), the detection circuit 1005 may include diodes 1020 and 1030 connected in parallel to a node 1040 extending from a gate of the transistor. The diode 1020 may include an anode connected to the one end 430-2 of the detection circuit 1005, and a cathode connected to the node 1040. Referring to FIG. 4A, the one end 430-2 of the detection circuit 1005 may be connected to a node 404 included in a path for supplying power from a battery 189 to a processor 120 and/or a second PMIC 420. The diode 1020 may include an anode connected to one end 1010 of the detection circuit 1005, and a cathode connected to the node 1040. The one end 1010 of the detection circuit 1005 may be connected to a hall sensor of the electronic device 101. For example, the one end 1010 of the detection circuit 1005 may be connected to a magnetic sensor 920 included in the hall sensor of the electronic device 101 of FIG. 9. A voltage of the node 1040 may indicate a result of performing an OR operation of voltages applied to the ends 1010 and 430-2 by a connection of the diodes 1020 and 1030 and the node 1040.

Referring to FIG. 10, the switch 510 may adjust the flow of current from the one end 430-1 to the one end 430-3 of the detection circuit 1005. In an embodiment in which the detection circuit 1005 receives a voltage Vs of the node 404 of FIG. 4A through the one end 430-2, receives a voltage Vm of the hall sensor of the electronic device 101 through the one end 1010, and receives a voltage Vb of the battery through the one end 430-1, a voltage Ven of the one end 430-3 of the detection circuit 1005 may be adjusted as illustrated in Table 1.

**[Table 1]**

| Vs | Vm | Ven |
|---|---|---|
| HIGH | HIGH | LOW |
| HIGH | LOW | LOW |
| LOW | HIGH | LOW |
| LOW | LOW | HIGH(or Vb) |

Referring to Table 1, HIGH may indicate a voltage exceeding a threshold voltage of the transistor included in the switch 510, and LOW may indicate a voltage under the threshold voltage of the transistor included in the switch 510. In case that a shape of the electronic device 101 has a preset shape to expose an interface (e.g., the interface 910 of FIG. 9) of the electronic device 101 to an outside, such as a state 900 of FIG. 9, it is assumed that the voltage Vm of the hall sensor outputs a preset voltage indicated as HIGH. In this case, the detection circuit 1005 of the electronic device 101 may output a preset voltage indicated as HIGH (or the voltage Vb of the one end 430-1) through the one end 430-3 while a mode of the processor of the electronic device 101 is in a sleep mode and the shape of the electronic device 101 has a shape different from the preset shape (e.g., all of Vs and Vm match a preset voltage indicated as LOW). In an embodiment in which the one end 430-3 of the detection circuit 1005 is connected to first switch circuitry 440 and second switch circuitry 460 of FIG. 4A, while the detection circuit 1005 outputs the preset voltage indicated as HIGH, the first switch circuitry 440 and the second switch circuitry 460 may transmit a control signal received from one or more buttons to a driving circuit 450. For example, while the detection circuit 1005 outputs the preset voltage indicated as HIGH, the electronic device 101 may drive a motor for deforming the electronic device 101 by using one or more buttons independently of the mode of the processor. While the mode of the processor of the electronic device 101 is in the sleep mode (e.g., Vs matches the preset voltage indicated as LOW), the electronic device 101 may be deformed by a user input based on one or more buttons. Referring to Table 1, as the electronic device 101 is deformed, the detection circuit 1005 of the electronic device 101 may output the preset voltage indicated as LOW because the voltage Vm of the hall sensor changes to the preset voltage indicated as HIGH at the time point when the shape of the electronic device 101 has the preset shape.

In the above embodiment, where the one end 430-3 of the detection circuit 1005 is connected to the first switch circuitry 440 and the second switch circuitry 460 of FIG. 4A, transmission of the control signal received from one or more buttons to the driving circuit 450 may be at least temporarily ceased at the time point when the detection circuit 1005 outputs the preset voltage indicated as LOW. For example, at the time point, the first switch circuitry 440 and the second switch circuitry 460 of FIG. 4A may connect the processor 120 and the driving circuit 450. Since the processor 120 is in the sleep mode, transmission of the control signal to the driving circuit 450 may be ceased at the time point. Since the transmission of the control signal to the driving circuit 450 is ceased, driving of the motor may be ceased at the time point. For example, as driving of the motor is ceased at the time point, deformation of the electronic device 101 may be ceased at the time point. For example, the electronic device 101 may maintain the preset shape at the time point.

As described above, the electronic device 101 according to an embodiment may be deformed into a specific state (e.g., the state 900 of FIG. 9) in which an interface (e.g., the interface 910 of FIG. 9) covered by a housing (e.g., the first housing 210 of FIG. 9) of the electronic device 101 is exposed to the outside, in a slide-in state among the an intermediate state between the slide-in state and a slide-out state. The deformation of the electronic device 101 into the specific state may be performed independently of the mode of the processor. The electronic device 101 may control the motor of the electronic device 101 to maintain the specific state by using a hall sensor (e.g., a hall sensor formed by the magnet 930 and the magnetic sensor 920 of FIG. 9) and a control circuit (e.g., a control circuit including the detection circuit 1005 of FIG. 10) connected to the hall sensor. The user of the electronic device 101 may perform an operation related to the interface by switching the electronic device 101 to the specific state while the mode of the processor is in the sleep mode (e.g., while the electronic device 101 is forcibly shut down as the SoC reaches 0%). In case that the interface includes a USB-C port, the operation related to the interface may include an operation of charging the electronic device 101 by using the USB-C port. In case that the interface includes an SD card slot, the operation related to the interface may include an operation of inserting the SD card into the SD card slot or extracting the SD card from the SD card slot. In case that the interface includes a SIM card slot, the operation related to the interface may include an operation of replacing the SIM card.

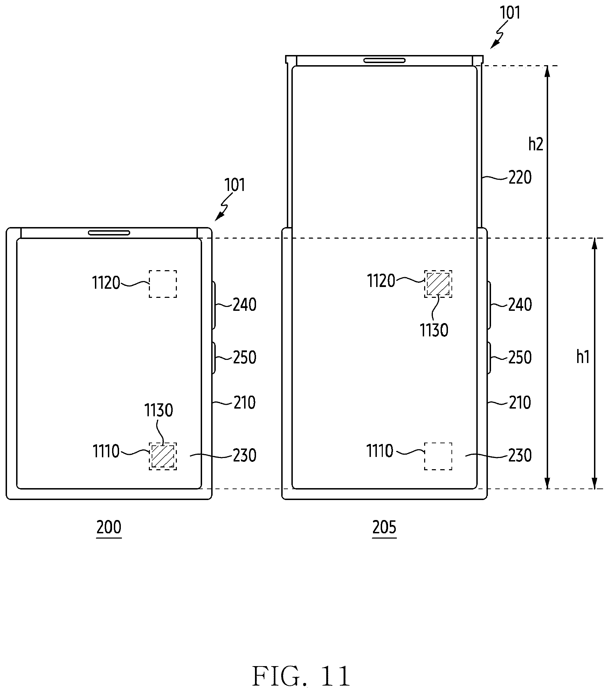

Although an embodiment in which one hall sensor is connected to the control circuit of the electronic device 101 has been described with reference to FIGS. 9 to 10, the embodiment is not limited thereto. Hereinafter, with reference to FIGS. 11 to 12, in an embodiment in which the electronic device 101 distinguishes different shapes of the electronic device 101 by using a plurality of hall sensors, a structure of the control circuit of the electronic device 101 connected to the plurality of hall sensors will be described.

FIG. 11 is an exemplary diagram for describing an operation performed by an electronic device 101 based on sensors for detecting an arrangement of housings, according to an embodiment. The electronic device 101 of FIG. 11 may include the electronic device 101 of FIGS. 1 to 10. For example, a first housing 210 and a second housing 220 of FIG. 11 may include the first housing 210 and the second housing 220 of FIGS. 2A to 2B. For example, a flexible display 230 of FIG. 11 may include the flexible display 230 of FIG. 3. For example, the sensors may include a hall sensor 330 of FIG. 3.

Referring to FIG. 11, a magnet 1130 and magnetic sensors 1110 and 1120 disposed in the electronic device 101 according to an embodiment are illustrated. The magnet 1130 and the magnetic sensors 1110 and 1120 may form a hall sensor (e.g., the hall sensor 330 of FIG. 3) for detecting a shape of the flexible display 230 and/or the electronic device 101. The magnet 1130 may be disposed on another housing slidably coupled to a housing of the electronic device 101 in which the magnetic sensors 1110 and 1120 are disposed. Referring to FIG. 11, an embodiment in which the magnet 1130 is disposed on the first housing 210 of the electronic device 101 and the magnetic sensors 1110 and 1120 are disposed on the second housing 220 of the electronic device 101 is illustrated, but the embodiment is not limited thereto.

States 200 and 205 of FIG. 11 may match the states 200 and 205 of FIGS. 2A and 2B. For example, the state 200 may be a slide-in state of the electronic device 101, and the state 205 may be a slide-out state of the electronic device 101. Referring to FIG. 11, in the state 200, a distance between the magnet 1130 and the magnetic sensor 1110 may be minimized. In the state 205, a distance between the magnet 1130 and the magnetic sensor 1120 may be minimized. Each of the magnetic sensors 1110 and 1120 may detect a magnetic field radiated from the magnet 1130. For example, the magnetic sensor 1110 may output a preset voltage (e.g., the preset voltage indicated as HIGH) in the state 200 in which the distance between the magnet 1130 and the magnetic sensor 1110 is minimal. In another state (e.g., the state 205, and/or an intermediate state) distinct from the state 200, the magnetic sensor 1110 may output another voltage (e.g., the preset voltage indicated as LOW) different from the preset voltage. For example, the magnetic sensor 1120 may output a preset voltage (e.g., the preset voltage indicated as HIGH) in the state 205 in which the distance between the magnet 1130 and the magnetic sensor 1120 is minimal. In the other state (e.g., the state 200, and/or the intermediate state) distinct from the state 205, the magnetic sensor 1120 may output the other voltage (e.g., the preset voltage indicated as LOW) different from the preset voltage.

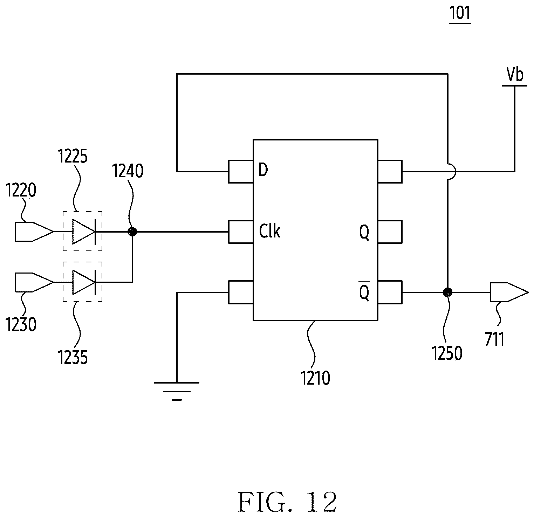

The electronic device 101 according to an embodiment may toggle a rotation direction of a motor (e.g., the motor 310 of FIG. 3) for deforming the electronic device 101 independently of the processor, based on the magnetic sensors 1110 and 1120 and the hall sensors formed by the magnet 1130. Hereinafter, with reference to FIG. 12, a structure a control circuit (e.g., the control circuit 320 of FIG. 3) of the motor connected to the hall sensors formed by the magnetic sensors 1110 and 1120 and the magnet 1130 will be described.

FIG. 12 is an exemplary circuit diagram of a signal processing circuit connected to sensors in a control circuit of an electronic device 101 of FIG. 11. The electronic device 101 of FIG. 12 may include the electronic device 101 of FIG. 11. For example, the control circuit of FIG. 12 may be an example of a control circuit 320 of FIG. 3.

Referring to FIG. 12, the control circuit of the electronic device 101 according to an embodiment may include a D flip-flop 1210. The D flip-flop 1210 is a circuit that outputs a bit, which is inputted through an input terminal D at a first clock distinguished by a clock signal applied to a clock terminal Clk, through an output terminal Q at a second clock after the first clock. The D flip-flop 1210 may include an inverted output terminal Q corresponding to an inverted output of the output terminal Q.

Referring to FIG. 12, the D flip-flop 1210 included in the control circuit of the electronic device 101 according to an embodiment may be activated based on a voltage Vb of a battery of the electronic device 101. For example, the D flip-flop 1210 may obtain power from a battery (e.g., the battery 189 of FIGS. 3 and 4A to 4B) independently of a power management module (e.g., the first PMIC 410 and/or the power management module 188 of FIG. 4A) of the electronic device 101, such as a node 402 of FIG. 4A. For example, the D flip-flop 1210 may be activated independently of a mode of a processor of the electronic device 101 and may process an electrical signal received from a sensor for detecting a shape of the electronic device 101.

In an embodiment, the control circuit of the electronic device 101 may process electrical signals received from hall sensors (e.g., hall sensors formed by the magnetic sensors 1110 and 1120 and the magnet 1130 of FIG. 11) of the electronic device 101 by using the D flip-flop 1210. Although an embodiment of the control circuit based on the D flip-flop 1210 is illustrated, the embodiment is not limited thereto. For example, the control circuit of the electronic device 101 may process the electrical signals received from the hall sensors based on a bistable circuit such as a JK flip-flop.

Referring to FIG. 12, the input terminal D of the D flip-flop 1210 may be connected to the inverted output terminal *Q̅* through a node 1250. Since the input terminal D and the inverted output terminal *Q̅* are connected, the D flip-flop 1210 may invert a bit of the inverted output terminal *Q̅* according to the clock signal applied to the clock terminal Clk. For example, the bit outputted from each of the output terminal Q and the inverted output terminal *Q̅* of the D flip-flop 1210 of FIG. 12 may be inverted for each clock signal, such as a T flip-flop. Referring to FIG. 12, a node 1240 extending from the clock terminal of the D flip-flop 1210 may be connected to diodes 1225 and 1235 corresponding to each of the hall sensors included in the electronic device 101. For example, the diode 1225 may include a cathode connected to the node 1240 and an anode connected to one end 1220 extending from a first hall sensor among the hall sensors. The first hall sensor may include, for example, the magnetic sensor 1110 of FIG. 11. The diode 1235 may include the cathode connected to the node 1240, and an anode connected to one end 1230 extending from a second hall sensor among the hall sensors. The second hall sensor may include, for example, the magnetic sensor 1120 of FIG. 11. A voltage of the node 1240 may indicate a result of performing an OR operation based on voltages received from the hall sensors by a connection of the diodes 1225 and 1235 and the node 1240.

The D flip-flop 1210 included in the control circuit of the electronic device 101 according to an embodiment may be connected to a driving circuit (e.g., the driving circuit 450 of FIG. 4A) of the control circuit. In an embodiment in which the D flip-flop 1210 is connected to the driving circuit 450 of FIG. 7, the inverted output terminal *Q̅* of the D flip-flop 1210 may be connected to a pin 711 of the driving circuit 450 to obtain a bit indicating a rotation direction of a motor (e.g., the motor 310 of FIG. 4A). With respect to a voltage V1 of the first hall sensor received through the one end 1220 and a voltage V2 of the second hall sensor received through the one end 1230, a voltage Vd of the inverted output terminal *Q̅* may be adjusted as illustrated in Table 2.

**[Table 2]**

| SHAPE OF ELECTRONIC DEVICE 101 | V1 | V2 | Vd |
|---|---|---|---|
| SLIDE-OUT STATE | HIGH | LOW | D' |
| INTERMEDIATE STATE | LOW | LOW | D |
| SLIDE-IN STATE | LOW | HIGH | D' |

Referring to Table 2, HIGH and LOW mean different voltages indicating 1 and 0 of the digital bit, respectively. D of Table 2 may mean that the inverted output terminal *Q̅* of the D flip-flop 1210 continuously outputs a voltage indicating a specific digital bit. D' of Table 2 may mean that the inverted output terminal *Q̅* of the D flip-flop 1210 outputs a voltage indicating another digital bit different from the digital bit that were being outputted. Referring to Table 2, a bit outputted by the signal processing circuit of FIG. 12 to the pin 711 may be inverted at a time point when the electronic device 101 reaches either the slide-out state or the slide-in state. As described above in FIG. 7, since the driving circuit 450 obtains the bit indicating the rotation direction of the motor through the pin 711, the signal processing circuit of FIG. 12 may invert the rotation direction of the motor at the time point when the electronic device 101 reaches either the slide-out state or the slide-in state. According to automatically inverting the rotation direction of the motor, the control circuit including the signal processing circuit based on the D flip-flop 1210 may cease the motor from driving in a direction that increases a dimension of a displaying area in the slide-out state, or the motor from driving in a direction that decreases the dimension of the displaying area in the slide-in state. As described above, the electronic device 101 according to an embodiment may activate a motor for deforming the electronic device 101 independently of the mode of the processor of the electronic device 101 including an AP. Activation of the motor may be performed while a voltage of the battery of the electronic device 101 is under a first preset voltage at which the processor switches to a sleep mode. The activation of the motor may be performed while the voltage of the battery exceeds a second preset voltage for execution of an under voltage lock out (UVLO) function of the motor. For example, the second preset voltage may be under the first preset voltage. Activating the motor by the electronic device 101 may be performed based on the control circuit described with reference to FIGS. 4A to 4B and 5 to 12. The control circuit may be activated by power received from the battery through another path distinguished from an electrical path between the battery and the processor.

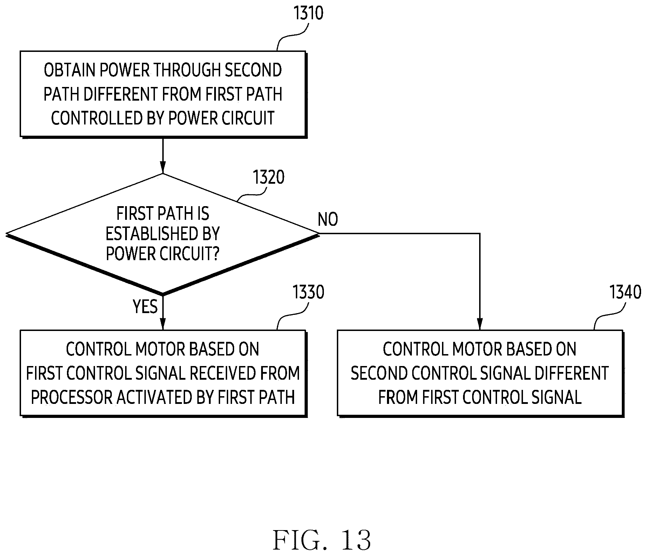

Hereinafter, operation of the control circuit will be described with reference to FIGS. 13 to 14.

FIG. 13 is a flowchart for describing an operation of an electronic device according to an embodiment. The electronic device of FIG. 13 may include an electronic device 101 of FIGS. 1 to 12. For example, at least one of operations of FIG. 13 may be performed by the electronic device 101 of FIG. 3 and/or a control circuit 320 of FIG. 3.

Referring to FIG. 13, in operation 1310, a control circuit of the electronic device according to an embodiment may obtain power through a second path different from a first path controlled by a power circuit. The power circuit may include a power management module 188 of FIGS. 3 to 4A. For example, the power circuit may include a first PMIC 410 of FIG. 4A. For example, the first path may be controlled by a switch 415 of FIG. 4A and may be an electrical path for supplying power to a processor (e.g., the processor 120 of FIGS. 3 and 4A to 4B) of the electronic device. The first path may be established according to a mode of the processor. For example, in case that the mode of the processor is an active mode, the first path may be established, and the processor may obtain power through the first path. For example, in case that the mode of the processor is a sleep mode, the first path may be insulated, and obtaining power by the processor may be at least temporarily ceased. In the above example, the second path may be established independently of whether the first path has been established. For example, the second path may include an electrical connection distinguished from the power circuit.

Referring to FIG. 13, in operation 1320, the control circuit of the electronic device according to an embodiment may determine whether the first path is established by the power circuit. For example, based on a detection circuit 430 of FIG. 4A and/or FIG. 5, the control circuit may determine whether the first path has been established. For example, the control circuit may detect a voltage (e.g., the voltage Vs of the node 404 of FIG. 4A and/or FIG. 5) of a node included in the first path. Based on the detected voltage, the control circuit may determine whether the first path has been established.

In a state detecting that the first path has been established by the power circuit (1320-yes), in operation 1330, the control circuit of the electronic device according to an embodiment may control a motor based on a first control signal received from the processor activated by the first path. The motor (e.g., the motor 310 of FIGS. 3 and 4A to 4B) may be disposed in the electronic device to deform the electronic device and/or a flexible display (e.g., the flexible display 230 of FIG. 3) included in the electronic device. The state in which the first path is established by the power circuit may include a state in which the processor receives power from a battery through the first path. The processor that receives power from the battery through the first path may operate based on the active mode.

In an embodiment, the control circuit may electrically connect a driving circuit (e.g., the driving circuit 450 of FIGS. 4A to 4B) connected to the motor to the processor by using one or more switch circuitries (e.g., the first switch circuitry 440 and the second switch circuitry 460 of FIG. 4A). The first control signal may be transmitted from the processor to the control circuit in response to the processor detecting an event for deforming the electronic device and/or the flexible display. The first control signal may include a first control signal S1 received through a port 440-3 of FIG. 4A. For example, in the state detecting that the first path has been established by the power circuit (1320-yes), a shape of the electronic device and/or the flexible display may be adjusted by the processor.

In a state detecting that the first path has not been established by the power circuit (1320-no), in operation 1340, the control circuit of the electronic device according to an embodiment may control the motor based on a second control signal different from the first control signal. The fact that the first path is not established may mean that the first path is insulated. The fact that the first path is not established may mean that receiving power from the battery by the processor of the electronic device has ceased due to the insulated first path. The processor may enter the sleep mode while receiving power from the battery is ceased.

While the processor enters the sleep mode, the control circuit of the electronic device according to an embodiment may control the motor independently of the first control signal occurring from the processor. For example, the control circuit of the electronic device may control the motor based on the second control signal different from the first control signal. While the processor enters the sleep mode, the control circuit of the electronic device may be directly connected to one or more buttons of the electronic device by using the one or more switch circuits. The second control signal may be transmitted from the one or more buttons to the control circuit by a user input of pressing the one or more buttons. For example, the second control signal may be transmitted to the control circuit by bypassing the processor.

As described above, the control circuit of the electronic device according to an embodiment may support driving the motor for deforming the electronic device and/or the flexible display included in the electronic device, independently of the mode of the processor. For example, in a state in which a voltage of the battery of the electronic device is lower than a preset voltage suitable for activating the processor, the control circuit may support the driving of the motor.

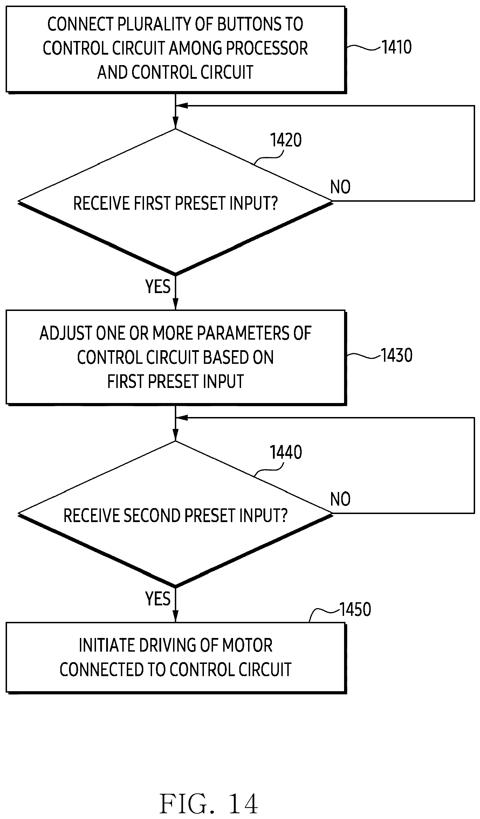

Hereinafter, referring to FIG. 14, while the control circuit is connected to one or more buttons of the electronic device by bypassing the processor, an operation that performs based on a user input received through the one or more buttons will be described.

FIG. 14 is a flowchart for describing an operation of an electronic device according to an embodiment. The electronic device of FIG. 14 may include an electronic device 101 of FIGS. 1 to 12 and/or the electronic device of FIG. 13. For example, at least one of operations of FIG. 14 may be performed by the electronic device 101 of FIG. 3 and/or a control circuit 320 of FIG. 3. At least one of the operations of FIG. 14 may be related to operations 1320 and 1340 of FIG. 13.

Referring to FIG. 14, in operation 1410, the control circuit of the electronic device according to an embodiment may connect a plurality of buttons to the control circuit among a processor and the control circuit. The plurality of buttons may include buttons 240 and 250 of FIGS. 2A to 2B. The control circuit may perform the operation 1410 in response to detecting that a mode of the processor is a sleep mode. The control circuit may connect the plurality of buttons to a driving circuit (e.g., the driving circuit 450 of FIGS. 4A to 4B) of the control circuit by using one or more switch circuitries (e.g., the first switch circuitry 440 and the second switch circuitry 460 of FIG. 4A).

Referring to FIG. 14, in operation 1420, the control circuit of the electronic device according to an embodiment may determine whether a first preset input has been received. The first preset input may include a gesture of pressing a first button among the plurality of buttons. The first button may be mapped to a function for adjusting a rotation direction of a motor (e.g., the motor 310 of FIGS. 3 and 4A to 4B) while the mode of the processor is in the sleep mode. Prior to receiving the first preset input (1420-no), the control circuit of the electronic device may maintain detecting the first preset input.

In a state of receiving the first preset input (1420-yes), in operation 1430, the control circuit of the electronic device according to an embodiment may adjust one or more parameters of the control circuit based on the first preset input. The one or more parameters may be adjusted by an electrical signal received from the plurality of buttons, or may be adjusted by a circuit (e.g., the circuit 640 of FIG. 6) of the electronic device that outputs a preset voltage. The one or more parameters may indicate at least one of the rotation direction, a rotation angle (e.g., an angle indicated as a rotation step), or a rotation speed of the motor. The one or more parameters may be adjusted based on preset voltages indicating 1, or 0 of a digital bit.

Referring to FIG. 14, in operation 1440, the control circuit of the electronic device according to an embodiment may determine whether a second preset input has been received. For example, during a time period of a preset length after receiving the first preset input in the operation 1420, the control circuit may determine whether the second preset input has been received. In case that the second preset input is not received within the time period, the control circuit may discard one or more parameters adjusted based on the operation 1430.

According to an embodiment, the second preset input received by the control circuit of the electronic device may include a gesture different from the first preset input of the operation 1420. For example, the second preset input may include a gesture of pressing a second button among the plurality of buttons. The second button may be mapped to a function for initiating driving of the motor while the mode of the processor is the sleep mode. The embodiment is not limited to the above example. For example, based on a signal processing circuit of FIG. 8, the second preset input may be generated by an electrical signal generated at a second time point after a first time point when the first preset input is received. In the above example, the second preset input may be matched to the first preset input. Prior to receiving the second preset input (1440-no), the control circuit of the electronic device may maintain detection of the second preset input. Maintaining the detection of the second preset input by the control circuit may be performed for a preset time period.

In a state of receiving the second preset input (1440-yes), in operation 1450, the control circuit of the electronic device according to an embodiment may initiate driving the motor connected to the control circuit. For example, the control circuit may output an alternating current voltage related to parameters adjusted by the operation 1430 to the motor based on a direct current voltage applied from the battery by using the driving circuit. By adjusting frequency or amplitude of the alternating current voltage, the control circuit may generate a movement of the motor based on at least one of the rotation direction or the rotation step indicated by the parameters adjusted by the operation 1430. After the driving the motor is initiated, the shape of the electronic device or the flexible display of the electronic device may be adjusted by the motor. As described above in FIGS. 9 to 12, driving the motor by the control circuit may be detected by a sensor (e.g., the hall sensor 330 of FIG. 3) included in the electronic device, and may be ceased based on an electrical signal indicating that the shape of the electronic device is a preset shape.

As described above, the electronic device according to an embodiment may support deformation of the electronic device and/or the flexible display of the electronic device based on receiving a user input independently of the mode of the processor. The control circuit of the electronic device may be connected to an interface (e.g., the buttons 240 and 250 of FIGS. 2A to 2B) for receiving the user input independently of the processor. The direct connection of the control circuit to the interface may be performed in response to detecting that obtaining power by the processor has ceased.

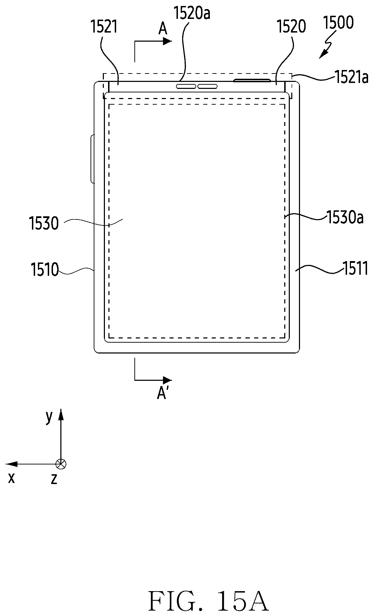

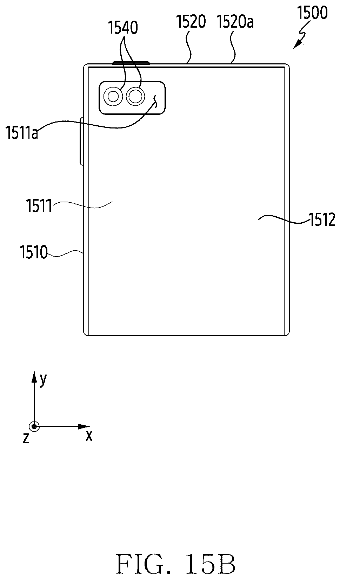

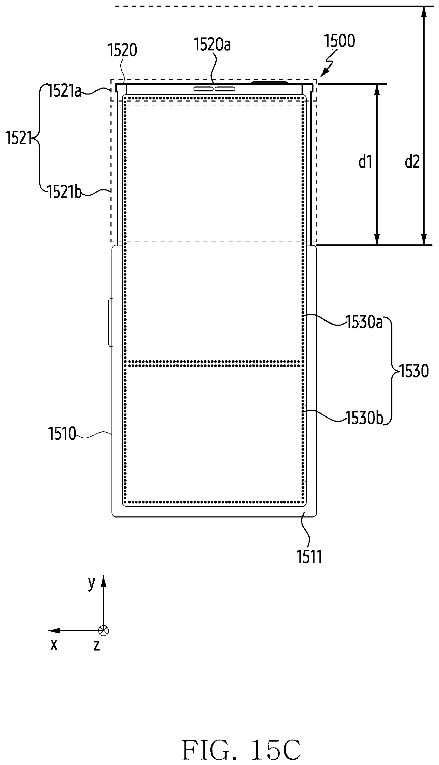

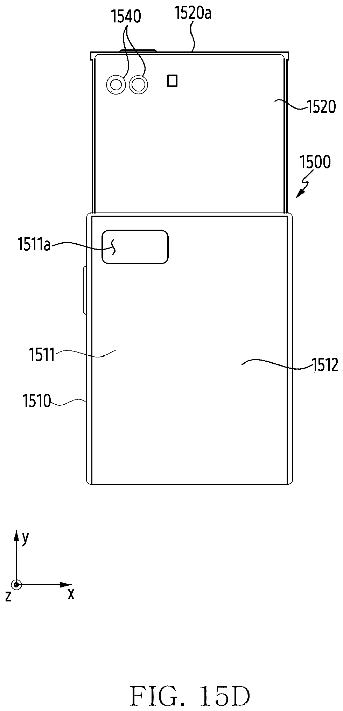

FIG. 15A is a front view of a first state of an electronic device according to an embodiment, FIG. 15B is a rear view of the first state of the electronic device according to an embodiment, FIG. 15C is a front view of a second state of the electronic device according to an embodiment, and FIG. 15D is a rear view of the second state of the electronic device according to an embodiment.

Referring to FIGS. 15A, 15B, 15C, and 15D, an electronic device 1500 (e.g., the electronic device 101 of FIGS. 1 to 3) according to an embodiment may include a first housing 1510, a second housing 1520, a display 1530 (e.g., the display module 160 of FIG. 1), and a camera 1540 (e.g., the camera module 180 of FIG. 1). According to an embodiment, the second housing 1520 may be slidable with respect to the first housing 1510. For example, the second housing 1520 may move in a range within a preset distance along a first direction (e.g., +y direction) with respect to the first housing 1510. When the second housing 1520 moves along the first direction, a distance between a side surface 1520a of the second housing 1520 facing the first direction and the first housing 1510 may increase. For another example, the second housing 1520 may move in a range within a preset distance along a second direction (e.g., -y direction) opposite to the first direction with respect to the first housing 1510. When the second housing 1520 moves along the second direction, the distance between the side surface 1520a of the second housing 1520 facing the first direction and the first housing 1510 may decrease. According to an embodiment, the second housing 1520 may linearly reciprocate with respect to the first housing 1510 by sliding relative to the first housing 1510. For example, at least a part of the second housing 1520 may be insertable into the first housing 1510 or be extractable from the first housing 1510.

According to an embodiment, the electronic device 1500 may be called a "slidable electronic device" since the second housing 1520 is designed to be slidable with respect to the first housing 1510. According to an embodiment, the electronic device 1500 may be called a "rollable electronic device" since at least a part of the display 1530 is designed to be wound inside the second housing 1520 (or the first housing 1510) based on a slide movement of the second housing 1520.

According to an embodiment, a first state of the electronic device 1500 may be defined as a state (e.g., a contracted state or a slide-in state) in which the second housing 1520 is moved in the second direction. For example, in the first state of the electronic device 1500, the second housing 1520 may not be substantially movable in the second direction. In the first state of the electronic device 1500, the distance between the side surface 1520a of the second housing 1520 and the first housing 1510 may not decrease. For another example, in the first state of the electronic device 1500, a part of the second housing 1520 may not be insertable. According to an embodiment, the first state of the electronic device 1500 may be a state in which a second area 1530b of the display 1530 is not visually exposed from an outside of the electronic device 1500. For example, in the first state of the electronic device 1500, the second area 1530b of the display 1530 may not be visible from the outside of the electronic device 1500 by being located inside an internal space (not illustrated) of the electronic device 1500 formed by the first housing 1510 and/or the second housing 1520.

According to an embodiment, a second state of the electronic device 1500 may be defined as a state (e.g., an extract state or a slide-out state) in which the second housing 1520 is moved in the first direction. For example, in the second state of the electronic device 1500, the second housing 1520 may not be substantially movable in the first direction. In the second state of the electronic device 1500, the distance between the side surface 1520a of the second housing 1520 and the first housing 1510 may not increase. For another example, in the second state of the electronic device 1500, a part of the second housing 1520 may not be extractable from the first housing 1510. According to an embodiment, the second state of the electronic device 1500 may be a state in which the second area 1530b of the display 1530 is visually exposed from the outside of the electronic device 1500. For example, in the second state of the electronic device 1500, the second area 1530b of the display 1530 may be visible from the outside of the electronic device 1500 by being extracted from the internal space of the electronic device 1500.

According to an embodiment, in case that the second housing 1520 moves from the first housing 1510 in the first direction, at least a part of the second housing 1520 and/or the second area 1530b of the display 1530 may be extracted from the first housing 1510 by an extraction length d1 corresponding to a moving distance of the second housing 1520. According to an embodiment, the second housing 1520 may reciprocate within a preset distance d2. According to an embodiment, the extraction length d1 may have a dimension of approximately 0 to the preset distance d2.

According to an embodiment, the state of the electronic device 1500 may be convertible between the second state and/or the first state, through a manual operation by a user or an automatic operation by a driving module (not illustrated) disposed inside the first housing 1510 or the second housing 1520. According to an embodiment, an operation of the driving module may be triggered based on a user input. According to an embodiment, the user input for triggering an operation of the driving module may include a touch input, a force touch input, and/or a gesture input through the display 1530. According to another embodiment, the user input for triggering the operation of the driving module may include a sound input (voice input) or an input of a physical button exposed to an outside of the first housing 1510 or the second housing 1520. According to an embodiment, the driving module may be driven in a semi-automatic manner in which an operation is triggered when the manual operation by an external force of the user is detected.

According to an embodiment, the first state of the electronic device 1500 may be referred to as a first shape, and the second state of the electronic device 1500 may be referred to as a second shape. For example, the first shape may include a normal state, a reduced state, or a closed state, and the second shape may include an open state. According to an embodiment, the electronic device 1500 may form a third state (e.g., an intermediate state) that is a state between the first state and the second state. For example, the third state may be referred to as a third shape, and the third shape may include a free stop state.

According to an embodiment, the display 1530 may be visible (or viewable) from the outside through a front direction (e.g., -z direction) of the electronic device 1500 so that visual information may be displayed to the user. For example, the display 1530 may include the flexible display. According to an embodiment, at least a part of the display 1530 is disposed in the second housing 1520, and may be extracted from the internal space (not illustrated) of the electronic device 1500 or may be inserted into the internal space of the electronic device 1500 according to the movement of the second housing 1520. The internal space of the electronic device 1500 may mean a space in the first housing 1510 and the second housing 1520, which is formed by a couple of the first housing 1510 and the second housing 1520. For example, in the first state of the electronic device 1500, at least a part of the display 1530 may be rolled into the internal space of the electronic device 1500 and be inserted. In a state in which at least a part of the display 1530 is inserted into the internal space of the electronic device 1500, when the second housing 1520 moves in the first direction, at least a part of the display 1530 may be extracted from the internal space of the electronic device 1500. For another example, when the second housing 1520 moves in the second direction, at least a part of the display 1530 may be inserted into the internal space of the electronic device 1500 by being rolled into the inside of the electronic device 1500. As at least a part of the display 1530 is extracted or inserted, an extent of the display 1530 visible from the outside of the electronic device 1500 may be expanded or reduced. According to an embodiment, the display 1530 may include a first area 1530a and/or the second area 1530b.

According to an embodiment, the first area 1530a of the display 1530 may mean an area of the display 1530 that may be fixedly visible from the outside of the electronic device 1500, regardless of whether the electronic device 1500 is in the second state or the first state. For example, the first area 1530a may mean a partial area of the display 1530 that is not rolled into the internal space of the electronic device 1500. According to an embodiment, when the second housing 1520 moves, the first area 1530a may move together with the second housing 1520. For example, when the second housing 1520 moves along the first direction or the second direction, the first area 1530a may move along the first direction or the second direction on a front surface of the electronic device 1500 together with the second housing 1520.

According to an embodiment, the second area 1530b of the display 1530 may be inserted into the internal space of the electronic device 1500 or may be extracted from the internal space of the electronic device 1500 to the outside according to the movement of the second housing 1520. For example, in the first state of the electronic device 1500, at least a part of the second area 1530b of the display 1530 may be in a rolled state and be inserted in the internal space of the electronic device 1500. The second area 1530b of the display 1530 may not be visible from the outside by being inserted into the internal space of the electronic device 1500 in the first state of the electronic device 1500. For another example, the second area 1530b of the display 1530 may be in a state extracted from the internal space of the electronic device 1500 in the second state of the electronic device 1500. The second area 1530b of the display 1530 may be visible from the outside of the electronic device 1500 in the second state.

According to an embodiment, in the first state of the electronic device 1500, the extent of the display 1530 visible from the outside of the electronic device 1500 may include only the first area 1530a of the display 1530. The extent of the display 1530 visible from the outside of the electronic device 1500 in the second state of the electronic device 1500 may include at least a part of the first area 1530a and the second area 1530b of the display 1530.

According to an embodiment, the first housing 1510 of the electronic device 1500 may include a first support member 1511 surrounding the internal space of the first housing 1510, a rear plate 1512 surrounding a rear surface of the first support member 1511, and a first side member 1514 surrounding at least a part of a periphery of the first support member 1511. According to an embodiment, the first support member 1511 may be formed integrally with the first side member 1514. The first support member 1511 may extend into an inside of the electronic device 1500 from at least a part of one surface of the first side member 1514 facing the inside of the electronic device 1500. According to an embodiment, the first support member 1511 and the first side member 1514 may be formed integrally or formed of the same material.

According to an embodiment, the second housing 1520 of the electronic device 1500 may include a second support member 1521 and a second side member 1529 surrounding the internal space of the electronic device 1500.

According to an embodiment, the second side member 1529 may form at least a part of a side surface of the second housing 1520. The second support member 1521 may support an electronic device (e.g., a camera 1540 and/or a printed circuit board 1524) disposed in the second housing 1520. The second side member 1529 may surround at least a part of the second support member 1521. According to an embodiment, the second support member 1521 may be formed integrally with the second side member 1529. The second support member 1521 may extend into an inside of the second housing 1520 from at least a part of one surface of the second side member 1524 facing the inside of the second housing 1520. According to an embodiment, the second support member 1521 and the second side member 1529 may be formed integrally or formed of the same material.

According to an embodiment, the second support member 1521 may include a first cover area 1521a of the second support member 1521 that is not inserted into an inside of the first housing 1510 and a second cover area 1521b that is inserted into or extracted from the inside of the first housing 1510. The first cover area 1521a of the second support member 1521 may always be visible regardless of whether the electronic device 1500 is in the second state or the first state. According to an embodiment, at least a part of the first cover area 1521a of the second support member 1521 may form the side surface 1520a of the second housing 1520. According to an embodiment, the second cover area 1521b of the second housing 1520 may not be visible in the first state, but may be visible in the second state.

The camera 1540 may obtain an image for a subject based on receiving light from the outside of the electronic device 1500. According to an embodiment, the camera 1540 may include one or a plurality of lenses, an image sensor, and/or an image signal processor. According to an embodiment, the camera 1540 may be disposed on the second housing 1520 to face a rear surface of the electronic device 1500, which is opposite to the front surface of the electronic device 1500 where the first area 1530a of the display 1530 is disposed. For example, the camera 1540 may be disposed on the second support member 1521 of the second housing 1520, and may be visible from the outside of the electronic device 1500 through an opening 1511a formed in the first support member 1511 when the electronic device 1500 is in the first state. For another example, the camera 1540 may be disposed on the second support member 1521 of the second housing 1520, and may not be visible from the outside of the electronic device 1500 by being covered by the first support member 1511 and/or the rear plate 1512, when the electronic device 1500 is in the first state.

According to an embodiment, the camera 1540 may include a plurality of cameras. For example, the camera 1540 may include a wide-angle camera, an ultra-wide-angle camera, a telephoto camera, a proximity camera, and/or a depth camera. However, the camera 1540 is not limited to necessarily including the plurality of cameras, and may include one camera.

According to an embodiment, the camera 1540 may further include a camera (not illustrated) facing the front surface of the electronic device 1500 in which the first area 1530a of the display 1530 is disposed. In case that the camera 1540 faces the front surface of the electronic device 1500, the camera 1540 may be an under display camera (UDC) disposed under the display 1530 (e.g., in a +z direction from the display 1530), but is not limited thereto.

According to an embodiment, the electronic device 1500 may include a sensor module (not illustrated) and/or a camera module (not illustrated) disposed under the display 1530. The sensor module may detect external environment based on information (e.g., light) received through the display 1530. According to an embodiment, the sensor module may include at least one of a receiver, a proximity sensor, an ultrasonic sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, a motor encoder, or an indicator. According to an embodiment, at least some sensor modules of the electronic device 1500 may be visually exposed from the outside through a partial area of the display 1530. According to an embodiment, the electronic device 1500 may detect the extraction length (e.g., length d1) by using the sensor module. According to an embodiment, the electronic device 1500 may generate extraction information with respect to a degree of extraction detected by the sensor. For example, the electronic device 1500 may detect and/or check the degree of extraction of the second housing 1520 by using the extraction information. According to an embodiment, the extraction information may include information on the extraction length of the second housing 1520.

According to an embodiment, a coupling form of the first housing 1510 and the second housing 1520 is not limited to a shape and coupling illustrated in FIGS. 15A, 15B, 15C, and 15D, and may be implemented by a combination and/or coupling of another shape or component.

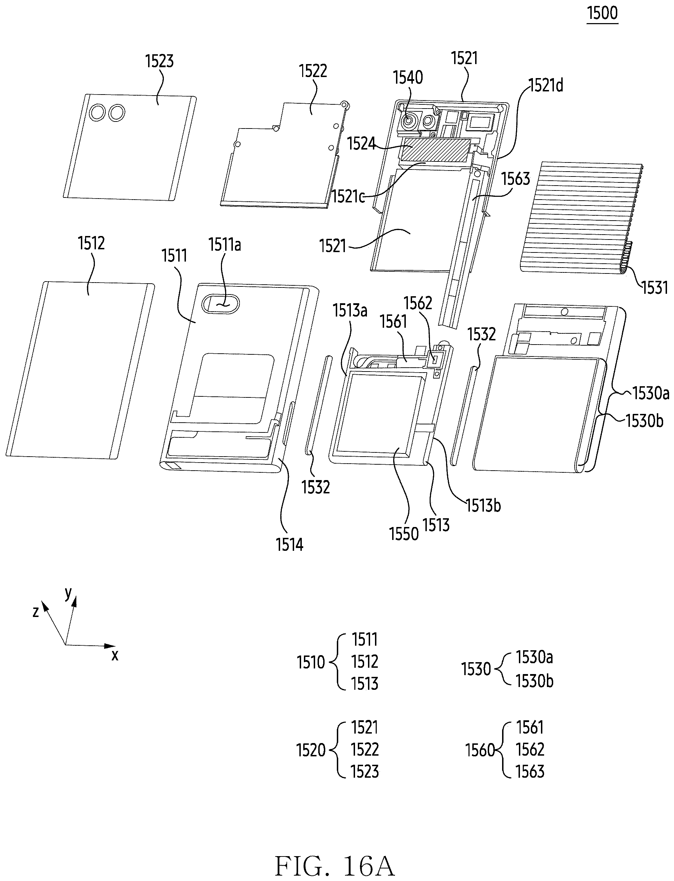

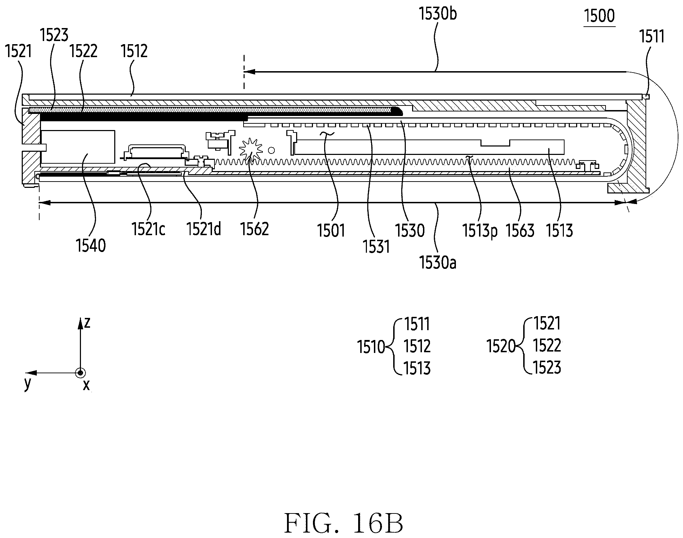

FIG. 16A is an exploded perspective view of an electronic device according to an embodiment, and FIG. 16B is a cross-sectional view illustrating an example of an electronic device cut along A-A' of FIG. 15A according to an embodiment.

Referring to FIGS. 16A and 16B, an electronic device 1500 according to an embodiment may include a first housing 1510, a second housing 1520, a display 1530, a camera 1540, a battery 1550 (e.g., the battery 189 of FIG. 1), and/or a driving unit 1560. According to an embodiment, the first housing 1510 and the second housing 1520 may form an internal space 1501 of the electronic device 1500 by being coupled to each other. For example, in a first state of the electronic device 1500, a second area 1530b of the display 1530 may be accommodated in the internal space 1501.

According to an embodiment, the first housing 1510 may include a first support member 1511, a rear plate 1512, and/or a third support member 1513. According to an embodiment, the first support member 1511, the rear plate 1512, and the third support member 1513 included in the first housing 1510 may not move when the second housing 1520 moves with respect to the first housing 1510, by being coupled to each other. According to an embodiment, the first support member 1511 may form at least a part of an outer surface of the electronic device 1500. For example, the first support member 1511 may form at least a part of a side surface of the electronic device 1500 and at least a part of a rear surface of the electronic device 1500. According to an embodiment, the rear plate 1512 may provide a surface on which the rear plate 1512 is seated. The rear plate 1512 may be mounted on one surface of the first support member 1511.

According to an embodiment, the third support member 1513 may support internal components of the electronic device 1500. For example, the third support member 1513 may accommodate the battery 1550 and a motor 1561 of the driving unit 1560. The battery 1550 and the motor 1561 may be accommodated in at least one of a recess or a hole included in the third support member 1513. According to an embodiment, the third support member 1513 may be surrounded by the first support member 1511. For example, in the first state of the electronic device 1500, one surface 1513a of the third support member 1513 on which the battery 1550 is disposed may face the first support member 1511 and/or the second area 1530b of the display 1530. For another example, in the first state of the electronic device 1500, another surface 1513b of the third support member 1513 facing the opposite direction to the one surface 1513a of the third support member 1513 may face a first area 1530a of the display 1530 or a second support member 1521. For example, the third support member 1513 may include aluminum as a material, but is not limited thereto.

According to an embodiment, the second housing 1520 may include the second support member 1521, a rear cover 1522, and/or a slide cover 1523. According to an embodiment, the second support member 1521, the rear cover 1522, and the slide cover 1523 may move together with the second housing 1520 when the second housing 1520 relatively moves with respect to the first housing 1510, by being coupled to each other. The second support member 1521 may support the internal components of the electronic device 1500. For example, a printed circuit board 1524 on which electronic components (e.g., the processor 120 of FIG. 1) of the electronic device 1500 are disposed and/or the camera 1540 may be disposed on one surface 1521c of the second support member 1521 facing the internal space 1501. Another surface 1521d of the second support member 1521 facing the opposite direction to the one surface 1521c of the second support member 1521 may face the first area 1530a of the display 1530 when the electronic device 1500 is in the first state. According to an embodiment, the rear cover 1522 may protect the components of the electronic device 1500 disposed on the second support member 1521 by being coupled to the second support member 1521. For example, the rear cover 1522 may cover a part of the one surface 1521c of the second support member 1521. According to an embodiment, the slide cover 1523 may form the outer surface of the electronic device 1500 together with the rear plate 1512 and the first support member 1511 by being disposed on the rear cover 1522. The slide cover 1523 may protect the rear cover 1522 and/or the second support member 1521 by being coupled to one surface of the rear cover 1522 or the second support member 1521.

According to an embodiment, when the electronic device 1500 is in the first state, the display 1530 may be bent by at least a part being rolled into the internal space 1501. According to an embodiment, the display 1530 may cover at least a part of the third support member 1513 and at least a part of the second support member 1521. For example, when the electronic device 1500 is in the first state, the display 1530 may extend toward the internal space 1501 by covering the other surface 1521d of the second support member 1521 and passing between the second support member 1521 and the first support member 1511. At least a part of the display 1530 may surround at least a part of the third support member 1513 after passing between the second support member 1521 and the first support member 1511. The display 1530 may cover the one surface 1513a of the third support member 1513 in the internal space 1501. According to an embodiment, when the second housing 1520 moves in a first direction, the second area 1530b of the display 1530 may be extracted from the internal space 1501. For example, as the second housing 1520 moves in a second direction, the display 1530 may be extracted from the internal space 1501 by passing between the second support member 1521 and the first support member 1511.

According to an embodiment, the electronic device 1500 may comprise a support bar 1531 and a guide rail 1532 supporting the display 1530. For example, the support bar 1531 may include a plurality of bars coupled to each other, and may be manufactured in a shape corresponding to a shape of the second area 1530b of the display 1530. According to an embodiment, the support bar 1531 may move together with the display 1530 as the display 1530 moves. According to an embodiment, in the first state in which the second area 1530b of the display 1530 is wound in the internal space 1501, the support bar 1531 may be wound in the internal space 1501 together with the second area 1530b of the display 1530. The support bar 1531 may move together with the second area 1530b of the display 1530 as the second housing 1520 moves in the first direction. According to an embodiment, the guide rail 1532 may guide a motion of the support bar 1531. For example, as the display 1530 moves, the support bar 1531 may move along the guide rail 1532 coupled to the third support member 1513. According to an embodiment, the guide rail 1532 may be coupled to the third support member 1513 or the first support member 1511. For example, the guide rail 1532 may include a plurality of guide rails 1532 disposed to be spaced apart from each other on both peripheries of the third support member 1513 spaced apart from each other along a third direction (e.g., +x direction) perpendicular to the first direction.

According to an embodiment, the driving unit 1560 may provide driving force to the second housing 1520 so that the second housing 1520 may relatively move with respect to the first housing 1510. According to an embodiment, the driving unit 1560 may include the motor 1561, a pinion gear 1562, and/or a rack gear 1563. The motor 1561 may provide driving force to the second housing 1520 by receiving power from the battery 1550. According to an embodiment, the motor 1561 may not move when the second housing 1520 moves with respect to the first housing 1510 by being disposed on the first housing 1510. For example, the motor 1561 may be disposed in the recess formed in the third support member 1513. According to an embodiment, the pinion gear 1562 may be coupled to the motor 1561, and rotate by the driving force provided from the motor 1561. According to an embodiment, the rack gear 1563 may engage with the pinion gear 1562, and move according to rotation of the pinion gear 1562. For example, the rack gear 1563 may linearly reciprocate in the first direction or the second direction according to the rotation of the pinion gear 1562. According to an embodiment, the rack gear 1563 may be disposed on the second housing 1520. For example, the rack gear 1563 may be coupled to the second support member 1521 included in the second housing 1520. According to an embodiment, the rack gear 1563 may be movable inside an operating space 1513p formed in the third support member 1513.

According to an embodiment, when the pinion gear 1562 rotates along a first rotation direction (e.g., clockwise in FIG. 16B), the rack gear 1563 may move in the first direction (e.g., +y direction). When the rack gear 1563 moves along the first direction, the second housing 1520 coupled to the rack gear 1563 may move along the first direction. As the second housing 1520 moves along the first direction, an extent of the display 1530 visible from an outside of the electronic device 1500 may be expanded. When the pinion gear 1562 rotates in a second rotation direction (e.g., counterclockwise in FIG. 16B), the rack gear 1563 may move in the second direction (e.g., -y direction). When the rack gear 1563 moves along the second direction, the second housing 1520 coupled to the rack gear 1563 may move along the second direction. As the second housing 1520 moves along the second direction, the extent of the display 1530 visible from the outside of the electronic device 1500 may be reduced.

The above description described the motor 1561 and the pinion gear 1562 are disposed on the first housing 1510, and the rack gear 1563 is disposed on the second housing 1520, but embodiments may not be limited thereto. According to the embodiments, the motor 1561 and the pinion gear 1562 may be disposed on the second housing 1520, and the rack gear 1563 may be disposed on the first housing 1510.

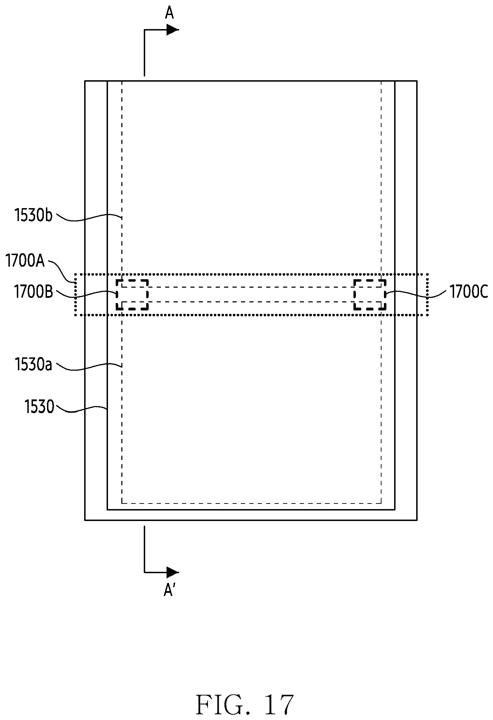

FIG. 17 is a front view of a second state indicating a boundary portion of a display among electronic devices according to an embodiment.

Referring to FIG. 17, a display 1530 of an electronic device 1500 may include a first area 1530a and a second area 1530b. The display 1530 may be referred to as a flexible display device that may be deformed according to a state of the electronic device 1500. The first area 1530a of the display 1530 may mean an area of the display 1530 visible from an outside of the electronic device 1500 regardless of the state of the electronic device 1500. The first area 1530a may mean a partial area of the display 1530 that is not rolled into an internal space of the electronic device 1500. The first area 1530a may be referred to as a plane area, since the first area 1530a always maintains a plane.

According to an embodiment, the second area 1530b of the display 1530 may extend from the first area 1530a, and be inserted into the internal space of the electronic device 1500 or be extracted from the internal space of the electronic device 1500 to the outside as a second housing 1520 (e.g., the second housing 1520 of FIG. 15A) moves. According to the state of the electronic device 1500, the second area 1530b may include an area forming a plane with the first area 1530a, and be rolled within the second housing 1520. Since the second area 1530b changes to a plane or curved surface according to the state of the electronic device, the second area 1530b may be referred to as a deformation area.

According to an embodiment, the display 1530 may include a different structure in a boundary area 1700a of the first area 1530a and the second area 1530b. For example, the first area 1530a always maintains a plane, so a support portion that supports the first area 1530a of the display 1530 may have a structure that does not deform. Since the second area 1530b is deformed according to the state of the electronic device 1500, the support portion that supports the second area 1530b of the display 1530 may have a deformable structure.

According to an embodiment, a boundary portion 1700A of the display 1530 may have a step according to the different structure of the first area 230a and the second area 230b, or the boundary portion 1700A may be visible due to a difference in reflectance. A structure of the electronic device 1500 or the display 1530 capable of reducing visibility of the boundary portion 1700A will be described in detail with reference to FIGS. 6A to 10.

According to an embodiment, a structure for preventing visibility of the boundary portion 1700A of the display 1530 may be formed at both ends 1700B and 1700C of the boundary portion 1700A. The display 1530 may include an active area that transmits visual information to the outside and/or an inactive area in which a pixel is not disposed or a dummy pattern that is not driven exists. The structure formed at both ends 1700B and 1700C may be disposed in the inactive area of the display 1530 and therefore, may not be visible to the outside regardless of driving the display 1530.

As described above, an electronic device according to an embodiment may comprise a first housing, a second housing slidably coupled with respect to the first housing, a rollable display that is insertable into the first housing or is extractable from the first housing, a motor providing driving power for slide-in driving or slide-out driving of the second housing, and a battery for storing an electric power. The electronic device may comprise system power supply circuitry supplying the electric power of the battery to the electronic device. The electronic device may comprise system power check circuitry checking an output value of the system power supply circuitry and outputting an enable signal in case that the output value is an off state. Based on the enable signal of the system power check circuitry, an electric power supplying loop may be formed such that the electric power of the battery is supplied to a motor driving integrated circuit (IC).

For example, the electronic device may comprise switch circuitry that selectively connect a control signal for driving the motor driving IC, to an application processor (AP) or an external physical button.

For example, the switch circuitry may be configured to connect the motor driving IC, based on the enable signal indicating that the output value is the off state, to the external physical button.

For example, the motor driving IC may be configured to control the motor, in response to an input indicating to press the external physical button connected through the switch circuitry, based on the electric power of the battery supplied by the power supplying loop.

For example, the switch circuitry may be configured to connect the motor driving IC, based on another signal indicating that the output value is in an on state different from the off state, to the AP.

For example, the system power check circuitry may be configured to output the enable signal in response to detecting that the output value of the system power supplying circuitry is lower than a preset threshold.

For example, the motor driving IC may be configured to receive an input indicating driving of the motor independently from an AP of the electronic device based on the enable signal.

For example, the system power supply circuitry may be different from the electric power supplying loop and form another electric power supplying loop to supply the electric power of the battery to the AP of the electronic device.

For example, the system power supply circuitry may be configured to at least temporarily cease to, in a state that a voltage of the battery is decreased lower than a preset threshold voltage, supplying the electric power of the battery to the AP based on the other electric power supplying loop.

For example, the preset threshold voltage may be greater than a voltage required to drive the motor.

For example, the system power check circuitry may be configured to output the enable signal based on whether the other electric power supply loop is formed by the system power check circuitry.

For example, the electronic device may comprise a connector that is formed in the second housing and configured to receive an electric power for charging the battery. The motor driving IC may be configured to control the motor based on a preset size such that the connector covered by the first housing is visually exposed, in a state that the electric power supplying loop is formed based on the enable signal.

For example, the electronic device may further comprise a sensor to detect a size by which the rollable display is exposed outside.

For example, the motor driving IC may be connected to the sensor independently from the AP in the electronic device.

For example, the electronic device may further comprise first switch circuitry connected to the motor driving IC and second switch circuitry connecting the AP of the electronic device and an external physical button. The second switch circuitry may be configured to transmit a control signal received from the external physical button to the first switch circuitry based on the enable signal. The first switch circuitry may be configured to transmit, among a control signal received from the AP or the control signal transmitted from the second switch circuitry, the control signal transmitted from the second switch circuitry to the motor driving IC based on the enable signal.

In an embodiment, as an electronic device includes a motor that actively changes a shape of a flexible display, a method for driving the motor in a power-off state of the electronic device may be required. As described above, an electronic device according to an embodiment may include a first housing. The electronic device may include a second housing slidably coupled with respect to the first housing. The electronic device may include a flexible display disposed on one surface of the second housing. The flexible display may be insertable into the first housing or extractable from the first housing. The electronic device may include a battery for storing power. The electronic device may include a power circuit that controls a first path for supplying the power stored in the battery. The electronic device may include a motor for inserting the flexible display into the first housing or extracting the flexible display from the first housing. The electronic device may include a control circuit that controls the motor. The electronic device may include at least one processor operably coupled to the flexible display, the power circuit, the motor, and the control circuit. The control circuit of the electronic device may be activated through a second path different from the first path. The control circuit of the electronic device may detect whether the first path has been established by the power circuit. The control circuit of the electronic device may control the motor based on a first control signal received from the at least one processor activated by the power supplied by the first path in a first state in which the first path is established. The control circuit of the electronic device may control the motor based on a second control signal different from the first control signal in a second state different from the first state. The electronic device according to an embodiment may drive a motor that actively changes a shape of the flexible display based on a user input in the power-off state of the electronic device.

For example, the control circuit may include a detection circuit that detects a voltage of a preset node included in the first path to detect whether the first path has been established. The control circuit may include switch circuitry that selects the first control signal and the second control signal based on the voltage detected by the detection circuit. The control circuit may include a driving circuit that drives the motor based on a control signal selected by the switch circuitry among the first control signal and the second control signal.

For example, the detection circuit may include a transistor for selectively applying a voltage of the battery applied through the second path to the switch circuitry according to the voltage of the preset node.

For example, the switch circuitry may transmit the first control signal among the first control signal and the second control signal to the driving circuit in the first state in which the voltage detected by the detection circuit exceeds a preset threshold. The switch circuitry may transmit the second control signal among the first control signal and the second control signal to the driving circuit in the second state in which the voltage is lower than the preset threshold.

For example, the driving circuit may obtain one or more AC signals to be applied to one or more coils included in the motor from the power of the battery supplied through the second path.

For example, the driving circuit may adjust frequencies of the one or more AC signals based on a control signal selected by the switch circuitry among the first control signal and the second control signal.

For example, the driving circuit may detect the second control signal based on the preset input in response to receiving a preset input of pressing a button exposed to an outside of the electronic device in the second state.

For example, the driving circuit may drive the motor along a direction indicated by the detected second control signal in response to receiving another preset input of pressing another button different from the button for a time period of a preset duration from the time point the preset input is received.

For example, the driving circuit may detect the second control signal for selecting a rotation direction of the motor based on a part pressed by the preset input among different parts of the button.

For example, the switch circuitry may be a first switch circuitry. The control circuit may include a second switch circuitry selectively transmitting the second control signal received from one or more buttons exposed to the outside of the electronic device to either the at least one processor or the first switch circuitry based on the voltage detected by the detection circuit.

For example, the second switch circuitry may transmit the second control signal to the at least one processor among the at least one processor or the first switch circuitry in the first state in which the voltage exceeds a preset threshold. The second switch circuitry may transmit the second control signal to the first switch circuitry among the at least one processor or the first switch circuitry in the second state in which the voltage is lower than the preset threshold.

For example, the power circuit may include a switch including a drain electrically connected to the preset node included in the first path, and a source electrically connected to the battery. The control circuit may receive the power from the battery through the second path extended from another node between the source of the switch and the battery.

For example, the electronic device may further include a sensor for detecting a dimension of an area of the flexible display exposed to the outside. The control circuit may detect the dimension by using the sensor while activating the motor based on the second control signal. The control circuit may deactivate the motor in response to detecting the dimension corresponding to a preset dimension.

For example, the sensor may be connected to the control circuit by bypassing the at least one processor.

For example, the second housing may be formed on another surface different from the surface on which the flexible display is disposed, and include a connector that is occluded at least temporarily by the first housing as the flexible display is inserted into the first housing. The control circuit may control the motor based on the preset dimension that causes the connector to be exposed to the outside.

A method of an electronic device according to an embodiment may include detecting whether a first path for supplying power stored in a battery of the electronic device has been established by a power circuit of the electronic device. The method of the electronic device may include controlling a motor for adjusting a dimension exposed to an outside of a flexible display of the electronic device based on a first control signal received from at least one processor of the electronic device activated by the power supplied by the first path in a first state in which the first path is established. The method of the electronic device may include controlling the motor based on a second control signal received based on a preset button of the electronic device in a second state different from the first state. The detecting operation may be performed based on the power supplied from a second path formed from the battery independently of the power circuit.

For example, the detecting may include detecting whether the first path has been established based on a voltage of a preset node included in the first path.

For example, the controlling the motor based on the second control signal may include obtaining an AC signal having a frequency indicated by the second control signal from the power supplied from the second path. The controlling the motor based on the second control signal may include transmitting the obtained AC signal to the motor.

For example, the controlling the motor based on the second control signal may include receiving the second control signal generated independently of the at least one processor by a preset input related to a button exposed to the outside of the electronic device.

For example, the controlling the motor based on the second control signal may include deactivating an electrical connection between the at least one processor and the driving circuit of the motor.

An electronic device according to an embodiment may include a first housing. The electronic device may include a second housing slidably coupled with respect to the first housing. The electronic device may include a flexible display disposed on one surface of the second housing, and insertable into the first housing, or extractable from the first housing. The electronic device may include a motor for inserting the flexible display into the first housing or extracting the flexible display from the first housing. The electronic device may include a control circuit that controls the motor. The electronic device may include at least one processor operably coupled to the flexible display, the motor, and the control circuit. The control circuit of the electronic device may control the motor based on a first control signal received from the at least one processor in a first time period in which a voltage exceeding a preset threshold is applied to the at least one processor. The control circuit of the electronic device may control the motor based on a second control signal received independently from the at least one processor in a second time period, different from the first time period, in which a voltage applied to the at least one processor is lower than the preset threshold.

For example, the electronic device may further include a battery electrically connected to the at least one processor and the flexible display through a first path, and electrically connected to the motor and the control circuit through a second path different from the first path.

For example, the preset threshold may be a first preset threshold. The control circuit of the electronic device may control the motor based on the second control signal in the second time period in which a state of charge (SoC) of the battery is lower than a second preset threshold.

For example, the at least one processor may display a visual object that guides charging of the battery on at least a part of the flexible display in response to detecting that the SoC is lower than the second preset threshold.

For example, the control circuit may include a driving circuit that outputs an AC signal to be transmitted to a coil included in the motor. The control circuit may include switch circuitry connected to the driving circuit. The switch circuitry may connect an electrical path extending from a preset button of the electronic device to the driving circuit in the second time period.

For example, the switch circuitry may connect the electrical path extending from the preset button to the driving circuit by bypassing the at least one processor.

For example, in the second time period, the control circuit may receive the second control signal generated based on a user input related to at least one of a first button for adjusting a rotation direction of the motor or a second button for initiating driving the motor.

For example, the electronic device may further include a sensor for detecting a dimension in which the flexible display is exposed to an outside. The control circuit may control the motor based on the dimension detected by the sensor in the second time period.

For example, the electronic device may further include an interface formed on a part of the second housing that is inserted into the first housing. The control circuit may detect the dimension by using the sensor while the dimension is increased by the motor in the second time period. The control circuit may cease controlling the motor in response to detecting the dimension that matches a preset dimension for the interface to be exposed to the outside.

For example, the at least one processor may operate based on a first mode for executing a plurality of preset functions in the first time period. The at least one processor may operate, in the second time period, based on a second mode that is different from the first mode and in which execution of the plurality of preset functions is at least temporarily ceased.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computerreadable recording medium.

The method according to the embodiment may be implemented in the form of a program command that may be performed through various computer means and recorded on a computerreadable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device comprising:
a first housing;
a second housing slidably coupled with respect to the first housing;
a rollable display that is insertable into the first housing or is extractable from the first housing;
a motor providing driving power for slide-in driving or slide-out driving of the second housing;
a battery for storing an electric power;
system power supply circuitry supplying the electric power of the battery to the electronic device;
system power check circuitry checking an output value of the system power supply circuitry and outputting an enable signal when the output value corresponds to an off state;
wherein the electronic device is configured to:
form an electric power supplying loop such that the electric power of the battery is supplied to a motor driving integrated circuit (IC) based on the enable signal of the system power check circuitry.

2. The electronic device of claim 1, comprising:
switch circuitry selectively connecting a control signal for driving the motor driving IC, to an application processor (AP) or an external physical button.

3. The electronic device of any one of claim 1 to claim 2, wherein the switch circuitry is configured to connect the motor driving IC, based on the enable signal indicating that the output value is the off state, to the external physical button.

4. The electronic device of any one of claim 1 to claim 3, wherein the motor driving IC is configured to control the motor, in response to an input indicating to press the external physical button connected through the switch circuitry, based on the electric power of the battery supplied by the power supplying loop.

5. The electronic device of any one of claim 1 to claim 4, wherein the switch circuitry is configured to connect the motor driving IC, based on another signal indicating that the output value is in an on state different from the off state, to the AP.

6. The electronic device of any one of claim 1 to claim 5, wherein the system power check circuitry is configured to output the enable signal in response to detecting that the output value of the system power supplying circuitry is lower than a preset threshold.

7. The electronic device of any one of claim 1 to claim 6, wherein the motor driving IC is configured to receive an input indicating to drive the motor independently from an AP of the electronic device based on the enable signal.

8. The electronic device of any one of claim 1 to claim 7, wherein the system power supply circuitry is configured to form another electric power supplying loop to supply an electric power of the battery to the AP of the electronic device that is different from the electric power supplying loop.

9. The electronic device of any one of claim 1 to claim 8, wherein the system power supply circuitry is configured to at least temporarily cease to, in a state that a voltage of the battery is decreased lower than a preset threshold voltage, supplying the electric power of the battery to the AP based on the another electric power supplying loop.

10. The electronic device of any one of claim 1 to claim 9, wherein the preset threshold voltage is greater than a voltage required to drive the motor.

11. The electronic device of any one of claim 1 to claim 10, wherein the system power check circuitry is configured to output the enable signal based on whether the another electric power supply loop is formed by the system power check circuitry.

12. The electronic device of any one of claim 1 to claim 11, comprising:
a connector that is formed in the second housing and is configured to receive an electric power for charging the battery,
wherein the motor driving IC is configured to:
in a state that the electric power supplying loop is formed based on the enable signal, control the motor based on a preset size such that the connector covered by the first housing is visually exposed.

13. The electronic device of any one of claim 1 to claim 12, further comprising:
a sensor to detect a size by which an area of the rollable display is exposed outside.

14. The electronic device of any one of claim 1 to claim 13, wherein the motor driving IC is connected to the sensor independently from an AP in the electronic device.

15. The electronic device of any one of claim 1 to claim 14, further comprising:
first switch circuitry connected to the motor driving IC; and
second switch circuitry connecting an AP of the electronic device and an external physical button,
wherein the second switch circuitry is configured to transmit a control signal received from the external physical button, to the first switch circuitry based on the enable signal;
wherein the first switch circuitry is configured to transmit, among a control signal received from the AP or the control signal transmitted from the second switch circuitry, the control signal transmitted from the second switch circuitry to the motor driving IC based on the enable signal.
